# EUROPÄISCHE PATENTSCHRIFT

(11) **EP 4 526 220 B1**
(45) Veröffentlichungstag und Bekanntmachung des Hinweises auf die Patenterteilung: **03.12.2025**
(21) Anmeldenummer: 24728967.1
(22) Anmeldetag: 22.05.2024
(51) Int. Cl.: B65D 6/24, B65D 19/06, B65D 21/032

(54) **WERKSTÜCKTRÄGERRAHMEN UND WERKSTÜCKTRÄGERRAHMENSYSTEM**
WORKPIECE CARRIER FRAME AND WORKPIECE CARRIER FRAME SYSTEM
CADRE DE PORTE-PIÈCE ET SYSTÈME DE CADRE DE PORTE-PIÈCE

(30) Priorität: 22.05.2023 DE 102023113330
(43) Veröffentlichungstag der Anmeldung: 26.03.2025
(73) Patentinhaber: ZELL Systemtechnik GmbH, 89584 Ehingen-Volkersheim (DE)
(72) Erfinder: ZELL, Ingo, 89584 Ehingen-Volkersheim (DE)
(74) Vertreter: Witte, Weller & Partner Patentanwälte mbB
(86) Internationale Anmeldenummer: PCT/EP2024/064078
(87) Internationale Veröffentlichungsnummer: WO 2024/240815

(56) Entgegenhaltungen:
- EP-A1- 3 827 931
- DE-A1- 3 526 259
- US-B1- 7 854 340

## Beschreibung

Die Erfindung betrifft einen Werkstückträgerrahmen und ein Werkstückträgerrahmensystem, aus deren Komponenten sich solch ein Werkstückträgerrahmen zusammensetzten lässt.

Ein Werkstückträgerkorb dient dazu, ein oder mehrere Werkstücke bereitzustellen und zu halten, sodass die Werkstücke im Rahmen ihres Fertigungsprozesses einer oder mehreren Fertigungsstationen zugeführt und bearbeitet und/oder sie zwischen den Fertigungsstationen transportiert und/oder sie zwischen den Fertigungsschritten gelagert werden können. In den Fertigungsstationen können Fertigungsschritte wie Waschen, mechanische Bearbeitung oder thermisches Härten durchgeführt werden.

Ein konventioneller Werkstückträgerkorb umfasst einen Rahmen und einen Trägerboden. Auf dem Trägerboden können Werkstücke abgelegt werden und mit dem Werkstückträgerkorb transportiert werden. Auf dem Trägerboden können Werkstückhalter angeordnet werden, durch die Werkstücke in einer gewünschten Position gehalten werden und gruppiert werden.

Änderungen im Fertigungsprozess können dazu führen, dass der ganze Werkstückträgerkorb ausgetauscht werden muss. Der Austausch ist mit Aufwand und Kosten verbunden.

Die DE 10 2022 104 192 A1 zeigt einen modular aufgebauten Werkstückträgerrahmen, der den umlaufenden Seitenrand eines modularen Werkstückträgerkorbs ausbildet.

Die EP 3 827 931 A1 zeigt ein Werkstückkorbsystem mit zumindest einem austauschbaren Werkstückträgereinsatz und einem Rahmen mit einer Haltevorrichtung für den in den Rahmen einsetzbaren oder eingesetzten zumindest einen Werkstückträgereinsatz, sodass bei eingesetztem zumindest einem Werkstückträgereinsatz der Rahmen und der zumindest eine Werkstückträgereinsatz zusammen einen Werkstückkorb bilden. Der Rahmen ist derart ausgebildet, dass mehrere Rahmen übereinander stapelbar sind, und die Haltevorrichtung ist derart ausgebildet, dass sie den Werkstückträgereinsatz lösbar hält.

Die US 7 854 340 B1 zeigt einen modularen Lagerbehälter für Gegenstände umfassend eine Bodenplatte, eine Vielzahl von stapelbaren Seitenwänden, die so konstruiert und angeordnet sind, dass sie mit der Bodenplatte verbunden werden können, eine Vielzahl von stapelbaren Endwänden, die so konstruiert und angeordnet sind, dass sie mit der Bodenplatte verbunden werden können, und eine Vielzahl von stapelbaren Eckelementen, die so konstruiert und angeordnet sind, dass sie angrenzend an eine Kante mit einer Seitenwand und angrenzend an eine gegenüberliegende Kante mit einer Endwand verbindbar sind. Jede Seitenwand und jede Endwand definieren eine Wandendöffnung, und jedes Eckelement weist ein von einem zylindrischen Vorsprung umgebenes Montageloch auf, wobei jeder zylindrische Vorsprung so konstruiert und angeordnet ist, dass er in eine entsprechende Wandendöffnung passt.

Die DE 35 26 259 A1 zeigt eine Magazinpalette für Rotationsteile aufweisen einen rechteckigen Rahmen und mindestens zwei langgestreckte Halteteile. Diese sind parallel zueinander mit ihren Enden an einander gegenüberliegenden Schenkeln des Rahmens befestigbar und weisen Einbuchtungen auf, in die die Rotationsteile in einer zur Rahmenebene parallelen Ebene einlegbar sind. Um eine universell verwendbare Magazinpalette mit einem Mindestmaß individualisierter Teile und gleichzeitig geringem Gewicht zu schaffen, sind die einander gegenüberliegenden Schenkel jeweils als ein Paar senkrecht zur Rahmenebene und parallel zueinander angeordneter Blechstreifen ausgebildet.

Die Halteteile sind an ihrer Unterseite mit balligen Zungen versehen, die in den Raum zwischen den Blechstreifen klemmend eingreifen.

Es stellt sich die Aufgabe, einen materialsparenden und flexibleren Ansatz vorzusehen.

Die Aufgabe wird gelöst durch einen Werkstückträgerrahmen und ein Werkstückträgerrahmensystem mit den Merkmalen der nebengeordneten Ansprüche.

Der Werkstückträgerrahmen umfasst eine Mehrzahl von Rahmeneckmodulen, die jeweils eine Mehrzahl von Eckelementen umfassen, und einen Modulrahmen, der ein Inneres des Werkstückträgerrahmens seitlich umschließt. Die Rahmeneckmodule sind in Eckbereichen des Werkstückträgerrahmens angeordnet, und ihre Eckelemente sind gestapelt aufeinander angeordnet und miteinander lösbar verbunden, sodass zwei benachbarte Eckelemente aus jeder Mehrzahl von Eckelementen oberseitig beziehungsweise unterseitig des Modulrahmens angeordnet sind und der Modulrahmen zwischen den zwei benachbarten Eckelementen verläuft.

In solch einen Werkstückträgerrahmen ist ein Trägerboden zur Ausbildung eines Werkstückträgerkorb einsetzbar. Der modulare Werkstückträgerrahmen umfasst eine Mehrzahl von Rahmeneckmodulen aus mehreren Eckelementen und zumindest einen Modulrahmen. Die Komponenten des modularen Werkstückträgerrahmens können in veränderlicher Weise zusammengefügt werden, sodass sich verschiedene Werkstückträgerrahmen durch die Eckelemente und den Modulrahmen bilden lassen. Bei Einsetzen eines Trägerbodens gilt das gleiche auch für Werkstückträgerkörbe mit solch einem Werkstückträgerrahmen.

Die Komponenten des Werkstückträgerrahmens sind lösbar zusammengefügt, wobei durch Austausch des Modulrahmens die Größe des Werkstückträgerrahmens in einfacher Weise modifiziert werden kann. Die Höhe des Werkstückträgerrahmens hängt von der Anzahl der gestapelt aufeinander angeordneten Eckelemente in den Rahmeneckmodulen ab, und kann durch Hinzufügen oder Entfernen von Eckelementen vergrößert beziehungsweise verringert werden. Die Größe des Modulrahmens definiert Länge und Breite des Werkstückträgerrahmens. In den Werkstückträgerrahmen ist ein Trägerboden einsetzbar, um einen Werkstückträgerkorb zur Aufnahme von Werkstücken auszubilden. Durch Austausch des Trägerbodens kann der Werkstückträgerkorb in einfacher Weise an einen veränderten Fertigungsprozess angepasst werden.

Die Rahmeneckmodule bilden die Eckbereiche des Werkstückträgerrahmens und sind durch den Modulrahmen verbunden. Die Anzahl der Rahmeneckmodule ist zumindest drei, idealerweise vier. Die Rahmeneckmodule erstrecken sich quer zum Rahmen. Die Seitenbereiche zwischen den Eckbereichen werden durch den zumindest einen Modulrahmen gebildet, der in den Eckbereichen durch die Rahmeneckmodule verläuft. Der Modulrahmen hat eine Vieleckform, vorteilhafterweise eine Rechteckform, sodass auch der Werkstückträgerrahmen eine Rechteckform mit vier Eckbereichen hat. Der Modulrahmen hat vorteilhafterweise eine geschlossene Rahmenform und ist beispielsweise aus einem rechteckig gebogenen Metallstab, insbesondere als Stahlstab ausgebildet, dessen Enden verschweißt sind. Der Stab kann einen runden oder vieleckigen Querschnitt haben.

Jedes Rahmeneckmodul umfasst zumindest zwei Eckelemente. Die Eckelemente eines Rahmeneckmoduls sind übereinander in Hochrichtung, das heißt senkrecht zum Modulrahmen, aufeinander angeordnet. "Oben" und "Unten" sowie davon abgeleitete Bezeichnungen, z.B. "Oberseite" und "Unterseite", sind einander entgegengesetzte relative Ortsbezeichnungen. Bezogen auf eine Gebrauchslage eines Werkstückträgerkorbs mit einem Werkstückträgerrahmen entspricht die Hochrichtung der Befüllrichtung des Werkstückträgerkorbs nach oben. Ein Trägerboden des Werkstückträgerkorbs ist unten. Die Eckelemente sind folglich in der Gebrauchslage gezogen auf eine horizontalen Ebene, in der der Modulrahmen angeordnet ist, vertikal aufeinander angeordnet.

Die Eckelemente sind lösbar miteinander verbunden, sodass sich durch Entfernen oder Hinzufügen eines oder mehrerer Eckelemente die Rahmenhöhe verändern lässt. Die lösbare Verbindung kann beispielsweise durch geeignete Verbindungsmittel, insbesondere Schraubverbindungsmittel, hergestellt werden. Beim Zusammenfügen der Eckelemente zum Rahmeneckmodul wird der Modulrahmen zwischen zweien der Eckelemente platziert und durch das Verbinden der Eckelemente in seiner Position fixiert.

Das Zusammenfügen der Eckelemente kann durch Stapelnasen und Stapelausnehmungen an den Eckelementen unterstützt werden, die bei den gestapelten Eckelementen ineinandergreifen. Stapelnasen können an den Oberseiten der Eckelemente und Stapelausnehmungen an deren Unterseiten vorgesehen sein, oder umgekehrt. Für die oberen und unteren Eckelemente des Rahmeneckmoduls sind Stapelnasen oder Stapelausnehmungen nur den Unterseiten beziehungsweise Oberseiten erforderlich. Stapelnasen sind Vorsprünge, deren Form mit der der Stapelausnehmungen korrespondiert, sodass sie formschlüssig ineinandergreifen und dadurch die Eckelemente zueinander ausrichten.

In einer Ausführung hat das obere der zwei benachbarten Eckelemente, zwischen denen der Modulrahmen verläuft, eine strukturierte Unterseite, und das untere der zwei benachbarten Eckelemente, zwischen denen der Modulrahmen verläuft, hat eine strukturierte Oberseite. Die strukturierte Oberseite und die strukturierte Unterseite benachbarter Eckelemente halten den Modulrahmen.

Strukturierte Oberseite und strukturierte Unterseite meint, dass diese so ausgebildet sind, dass bei benachbarten, aufeinander gestapelten Eckelementen Oberseite und Unterseite aufeinander liegen und dabei den Modulrahmen in einer Aussparung der Oberseiten und/oder Unterseite halten. Die strukturierte Oberseite und die strukturierte Unterseite umgeben den Modulrahmen seitlich, insbesondere formschlüssig, zumindest abschnittsweise, vorteilhafterweise vollständig. Ein Modulrahmen mit rundem Querschnitt kann beispielsweise in einem Kreisbogen von 270 Grad oder 360 Grad umschlossen sein. Auf diese Weise wird der Modulrahmen zwischen den beiden Eckelementen gegen seitliches Herausgleiten gesichert. Die strukturierte Oberseite und die strukturierte Unterseite berühren sich in den aufeinander liegenden Bereichen.

In einer alternativen Ausführung hat nur eines der benachbarten Eckelemente mit einander zugewandter Oberseite beziehungsweise Unterseite eine strukturierte Oberseite oder eine strukturierte Unterseite, die jedoch so ausgebildet ist, dass sie den ganzen Querschnitt des Modulrahmens aufnimmt. Das andere Eckelement verhindert die Bewegung des Modulrahmens in Stapelrichtung. Die Oberseite und die Unterseite, die einander zugewandt sind, halten den Modulrahmen, der in der Struktur auf Oberseite oder Unterseite verläuft.

Oberseite und Unterseite sind derart strukturiert, dass sie den Modulrahmen in der Strukturierung halten. Die Strukturierung, die einen Bereich des Modulrahmens aufnimmt, kann sowohl auf der Oberseite als auch auf der Unterseite ausgebildet sein. Der Querschnitt des Modulrahmens greift dann in beide benachbarten Eckmodule. Alternativ ist die Strukturierung nur in einem Eckmodul ausgebildet, das den Querschnitt ganz aufnimmt, das andere Eckmodul deckt die Strukturierung ab. Die Strukturierung ist vorteilhafterweise nutförmig und korrespondiert mit dem Querschnitt des Modulrahmens.

Eine strukturierte Oberseite und/oder strukturierte Unterseite haben beim Rahmeneckmodul vorteilhafterweise nicht nur die Eckelemente, zwischen denen der Modulrahmen verläuft, sondern auch andere Eckelemente im Stapel, sodass in einfacher Weise ein weiterer Modulrahmen einfügbar ist, indem die Verbindung zwischen den Eckelementen gelöst wird, der weitere Modulrahmen eingefügt wird, und die Eckelemente wieder verbunden werden.

Vorteilhafterweise hat der Werkstückträgerrahmen zumindest einen ersten und einen zweiten Modulrahmen, die übereinander angeordnet sind. Dadurch wird die Stabilität des Werkstückträgerrahmens erhöht, was insbesondere bei höheren Werkstückträgerrahmen von Vorteil ist. Der erste Modulrahmen ist zwischen zwei benachbarten Eckelementen aus jeder Mehrzahl von Eckelementen angeordnet und verläuft zwischen diesen. Der zweite Modulrahmen ist zwischen zwei weiteren benachbarten Eckelementen aus jeder Mehrzahl von Eckelementen angeordnet und verläuft zwischen diesen. Bei solch einer Ausführung sind zwischen dem ersten und zweiten Modulrahmen in jedem Rahmeneckmodul zumindest zwei Eckelemente angeordnet. Alternativ kann auch nur ein Eckelement zwischen dem ersten und dem zweiten Modulrahmen vorgesehen sein. In diesem Fall sind der erste und der zweite Modulrahmen zwischen drei benachbarten Eckelementen angeordnet, sodass zwischen den beiden unteren Eckelementen der drei Eckelemente der erste Modulrahmen verläuft und zwischen den beiden oberen Eckelementen der zweite Modulrahmen verläuft.

In einer Ausführung sind die unteren Eckelemente der Rahmeneckmodule als Bodenelemente ausgebildet, die eine ins Innere ragende Auflage aufweisen, auf der eine Trägerplatte aufsetzbar ist und vorteilhafterweise daran befestigbar ist, beispielsweise durch lösbare Verbindungsmittel. Vorteilhafterweise sind lediglich die unteren Eckelemente der Rahmeneckmodule so ausgebildet, dass die Trägerplatte auf sie aufsetzbar ist. Bei einem rechteckigen Werkstückträgerrahmen sind Auflagen in den vier Eckbereichen vorgesehen, sodass die Trägerplatte an ihren Ecken im Werkstückträgerrahmen aufliegt.

**In** einer Ausführung weisen Eckelemente, die auf die Bodenelemente aufgesetzt sind, einen auf den Trägerboden ragenden Bereich auf, sodass Eckbereiche des Trägerbodens zwischen den Bodenelementen als unteren Eckelementen und den auf den Bodenelementen jeweils aufgesetzten Eckelementen angeordnet sind. Die Bodenelemente weisen jeweils eine oberseitige Ausnehmung für den Eckbereich auf. Bei dieser Ausführung werden die Eckbereiche des Trägerbodens oben und unten von benachbarten Eckelementen gehalten. Die Trägerplatte wird bereits beim Zusammenbau der Rahmeneckmodule zwischen den Eckelementen platziert und fixiert.

**In** einer Ausführung sind die oberen Eckelemente der Rahmeneckmodule als Randelemente ausgebildet, sodass sie einen nicht durchgehenden, oberen Rand formen. Der obere Rand bildet einen Abschluss des Werkstückträgerrahmens. Die Randelemente haben vorteilhafterweise eine strukturierte Unterseite zum Halten des Modulrahmens, jedoch keine strukturierte Oberseite. Ähnliches gilt für die Bodenelemente, die vorteilhafterweise eine strukturierte Oberseite zum Halten des Modulrahmens haben, jedoch keine strukturierte Unterseite.

**In** einer Ausführung ist der Werkstückträgerrahmen stapelbar, indem dessen oberer Rand als erster Stapelrand ausgebildet ist und die Unterseiten der Bodenelemente so ausgebildet sind, dass sie einen zweiten Stapelrand formen. Beide Stapelränder sind nicht durchgehend. Der zweite Stapelrand greift im gestapelten Zustand in den ersten Stapelrand eines weiteren Werkstückträgerrahmens, auf den der Werkstückträgerrahmen gestapelt ist, sodass seitliches Abgleiten des Werkstückträgerrahmens verhindert wird.

Die beiden Eckelemente, zwischen denen der Modulrahmen oder einer der Modulrahmen verläuft, können als erstes Zwischenelement ausgebildet sein, das sowohl eine strukturierte Oberseite als auch eine strukturierte Unterseite zum Halten des Modulrahmens hat. Das erste Zwischenelement kann zwischen zwei Modulrahmen angeordnet werden. Zusätzlich oder alternativ können ein zweites und ein drittes Zwischenelement als Eckelement vorgesehen sein, zwischen denen der Modulrahmen oder einer der Modulrahmen verläuft. Das zweite Zwischenelement hat nur eine strukturierte Oberseite zum Halten des Modulrahmens, jedoch keine strukturierte Unterseite. Das dritte Zwischenelement hat nur eine strukturierte Unterseite zum Halten des Modulrahmens, jedoch keine strukturierte Oberseite. Bei der Verwendung von nur zweiten und dritten Zwischenelementen muss dann zwischen zwei Modulrahmen sowohl ein zweites als auch ein drittes Zwischenelement angeordnet werden. Auch eine Kombination von erstem Zwischenelement mit entweder zweitem oder drittem Zwischenelement, um einen Modulrahmen ist zu halten, ist möglich. Zusätzlich können Abstandelemente vorgesehen sein, die zwischen den oben genannten Eckelementen platziert werden können. Abstandselemente können keinen Modulrahmen halten, ermöglichen jedoch die Höhe des Werkstückträgerrahmens zu verändern. Die Zwischenelemente können zwischen Bodenelement und Randelement angeordnet werden.

Da die Strukturierung eine Ausnehmung für den Modulrahmen umfasst, ist ein Zwischenelement, das entweder eine strukturierte Oberseite oder eine strukturierte Unterseite hat, stabiler als das erste Zwischenelement mit sowohl strukturierter Oberseite als auch strukturierter Unterseite. Das zweite und dritte Zwischenelement können flacher ausgebildet sein als das erste Zwischenelement.

Um die Rahmenhöhe zu verändern, können noch Eckelemente, die als Abstandselemente ausgebildet sind, vorgesehen sein. Sie weisen weder eine strukturierte Oberseite noch eine strukturierte Unterseite zum Halten des Modulrahmens auf, sondern wirken als Abstandshalter.

In einer Ausführung weist die strukturierte Oberseite eine erste Nut auf, und die strukturierte Unterseite weist eine zweite Nut auf. Die erste und zweite Nut bilden eine durchgehende Aussparung, durch die der Modulrahmen oder einer der Modulrahmen verläuft. Vorteilhafterweise umschließt diese Aussparung den Modulrahmen seitlich zumindest abschnittsweise. Vorteilhafterweise haben die erste Nut und die zweite Nut jeweils einen abgewinkelten Verlauf, der mit der Form des Eckbereichs des Modulrahmens korrespondiert. Der abgewinkelte Verlauf kann abgerundet sein.

Ein Werkstückträgerrahmensystem umfasst eine Mehrzahl von Eckelementen, insbesondere eine Mehrzahl von Randelementen, Bodenelementen und Zwischenelementen, sowie zumindest einen Modulrahmen. Die Komponenten sind zu einem ersten Werkstückträgerrahmen zusammensetzbar, und sie sind zu einem zweiten Werkstückträgerrahmen zusammensetzbar. Die Anzahl der Eckelemente ist ausreichend, um entweder nur einen der beiden Werkstückträgerrahmen zusammensetzen zu können und den anderen erst nach dem Demontieren des einen Werkstückträgerrahmens zusammensetzen zu können oder um beide Werkstückträgerrahmen gleichzeitig zusammensetzen zu können. Die Werkstückträgerrahmen unterscheiden sich hinsichtlich ihrer Höhe, was durch eine unterschiedliche Anzahl von Eckelementen in den Rahmeneckmodulen bedingt ist. Bei einem Werkstückträgerrahmensystem mit verschiedenen Modulrahmen kann auch die Rahmengröße verändert werden.

Nachfolgend werden einige Ausführungsbeispiele anhand der Zeichnung näher erläutert. Es zeigen:
Figur 1 ein Ausführungsbeispiel eines modularen Werkstückträgerkorbs mit einem Werkstückträgerrahmen in einer dreidimensionalen Darstellung,
Figur 2 den modularen Werkstückträgerkorb in einer dreidimensionalen Explosionsdarstellung,
Figur 3 in einer dreidimensionalen Darstellung einen Eckbereich des Werkstückträgerkorbs von außen,
Figur 4 in einer dreidimensionalen Darstellung den Eckbereich des Werkstückträgerkorbs von oben,
Figur 5 in einer dreidimensionalen Darstellung den Eckbereich des Werkstückträgerkorbs von unten,
Figur 6 ein weiteres Ausführungsbeispiel eines modularen Werkstückträgerkorbs mit einem Werkstückträgerrahmen in einer dreidimensionalen Darstellung,
Figur 7 den weiteren modularen Werkstückträgerkorb in einer dreidimensionalen Explosionsdarstellung,
Figur 8 in einer dreidimensionalen Darstellung einen Eckbereich des weiteren Werkstückträgerkorbs von außen,
Figur 9 in einer dreidimensionalen Darstellung den Eckbereich des weiteren Werkstückträgerkorbs von oben,
Figur 10 in einer dreidimensionalen Darstellung den Eckbereich des weiteren Werkstückträgerkorbs von unten,
Figur 11 noch ein weiteres Ausführungsbeispiel eines modularen Werkstückträgerkorbs mit einem Werkstückträgerrahmen in einer dreidimensionalen Darstellung,
Figur 12 den modularen Werkstückträgerkorb in einer dreidimensionalen Explosionsdarstellung,
Figur 13 in einer dreidimensionalen Darstellung den Eckbereich des Werkstückträgerkorbs von oben,
Figur 14 in einer dreidimensionalen Darstellung den Eckbereich des Werkstückträgerkorbs von unten, und
Figur 15 noch ein weiteres Ausführungsbeispiel eines modularen Werkstückträgerkorbs mit einem Werkstückträgerrahmen in einer dreidimensionalen Darstellung.

In den Figuren sind gleiche oder funktional gleichwirkende Komponenten mit den gleichen Bezugszeichen versehen.

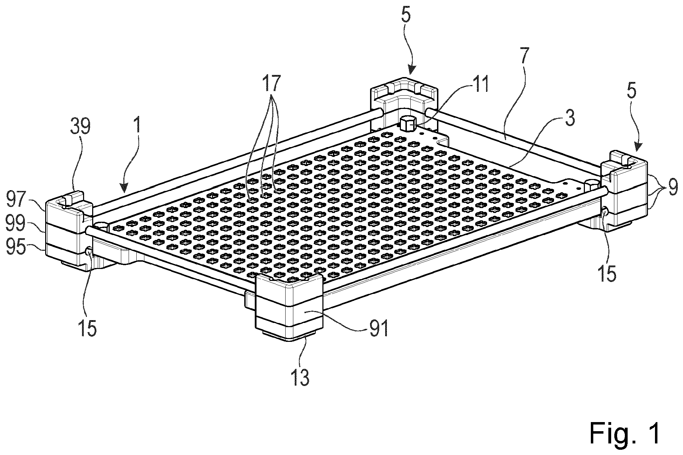

Figur 1 zeigt ein Ausführungsbeispiel eines modularen Werkstückträgerkorbs mit einem Werkstückträgerrahmen 1 und einem Trägerbogen 3 in einer dreidimensionalen Darstellung. Solch ein Werkstückträgerrahmen 1 bildet den umlaufenden seitlichen Rand des Werkstückträgerkorbs. Der Trägerboden 3 bildet eine Auflagefläche für Werkstücke und/oder Werkstückhalter zur Aufnahme von Werkstücken.

Der modulare Werkstückträgerrahmen umfasst vier Rahmeneckmodule 5 sowie einen Modulrahmen 7. Der Werkstückträgerrahmen 1 ist rechteckförmig und hat vier Eckbereiche. Die Rahmeneckmodule 7 sind in den Eckbereichen des Werkstückträgerrahmens 1 angeordnet und erstrecken sich quer zur Ebene, in der der Modulrahmen 7 verläuft. Der Modulrahmen 7 verläuft durch die Rahmeneckmodule 7.

Jedes der Rahmeneckmodule 7 umfasst drei aufeinandergestapelte Eckelemente 9, die lösbar miteinander verbunden sind. Die unteren Eckelemente 9 der Rahmeneckmodule 7 sind als Bodenelemente 95 ausgebildet, auf denen die Trägerplatte 3 aufgesetzt ist und durch lösbare Verbindungsmittel 11, nämlich schraubbare Verbindungsmittel, befestigt ist.

Die oberen Eckelemente 9 sind als Randelemente 97 ausgebildet, sodass sie einen nicht durchgehenden oberen Rand des Werkstückträgerrahmens 1 formen. Der obere Rand ist als erster Stapelrand ausgebildet und Unterseiten der Bodenelemente 95 sind als Eingriffe 13 zu einem zweiter Stapelrand ausgebildet. Der zweite Stapelrand greift im gestapelten Zustand in den ersten Stapelrand eines weiteren Werkstückträgerrahmens 1, auf den der Werkstückträgerrahmen 1 gestapelt ist, sodass seitliches Abgleiten des Werkstückträgerrahmens 1 verhindert wird.

Zwischen Randelement 97 und Bodenelement 95 ist ein weiteres Eckelement 9 als Zwischenelement 99 angeordnet, durch das Randelement 97 und Bodenelement 95 voneinander beabstandet sind. Zwischen den Randelementen 97 und den Zwischenelementen 99 verläuft der Modulrahmen 7. Die Unterseiten der Randelemente 95 und die Oberseiten der Zwischenelemente 99 sind so strukturiert, dass sie durchgehenden Aussparungen ausbilden, in denen die Eckbereiche des Modulrahmens 7 verlaufen. Die Randelemente 97 und die Zwischenelemente 99 umgeben den Modulrahmen 7 seitlich und halten ihn in seiner Position.

Auch die Unterseiten der Zwischenelemente 99 und die Oberseiten der Bodenelemente 95 sind strukturiert, sodass sie durchgehende Aussparungen 15 ausbilden. Obgleich zwischen den Aussparungen 15 ein weiterer Modulrahmen 7 einsetzbar wäre, ist in diesem Ausführungsbeispiel keiner vorgesehen.

Der Trägerboden 3 weist eine Vielzahl von Aussparungen 17 auf, in denen Werkstückhalter (in Figur 1 nicht dargestellt) in veränderbarer Anordnung einsetzbar sind. Wegen seiner Befestigung durch die lösbare Verbindungsmittel 11 kann der Trägerboden 3 durch einen alternativen Trägerboden, der beispielsweise als Gitter ausgebildet ist, ersetzt werden. Trägerböden 3 können beispielsweise aus Kunststoff oder Metall ausgebildet sein.

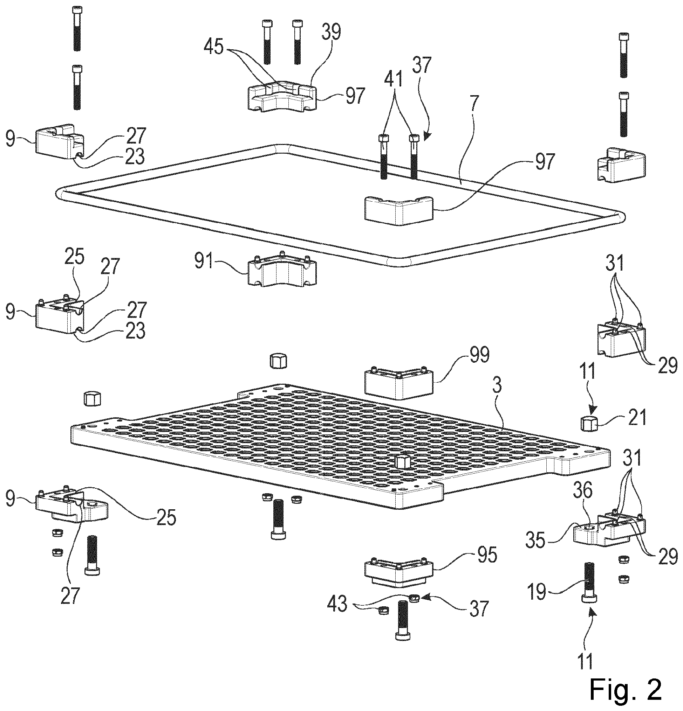

Figur 2 zeigt den modularen Werkstückträgerkorb aus Figur 1 in einer dreidimensionalen Explosionsdarstellung. Der Werkstückträgerrahmen 1 umfasst die dargestellten Komponenten außer der Trägerplatte 3 und deren Verbindungsmittel 11, in diesem Fall Schrauben 19 und Hutmuttern 21.

Jedes der Rahmeneckmodule 5 umfasst drei aufeinandergestapelte Eckelemente 9. Die Eckelemente 9 sind einstückig und beispielsweise aus Kunststoff ausgebildet. Solch ein Eckelement 9 lässt sich in einfacher Weise als Spritzgussteil fertigen.

Die unteren, als Bodenelemente 95 ausgebildeten Eckelemente 9 haben eine winklige Grundform, deren Schenkel im rechten Winkel aufeinanderstoßen. Ihre strukturierte Oberseite 25 weist eine rechtwinklig verlaufende Nut 27 auf. Durchmesser und Form der Nut 27 korrespondiert mit einem Eckbereich des Modulrahmens 7, sodass dessen unterer Bereich in der Nut 27 einsetzbar ist. Außerdem sind an der Oberseite 25 drei aufragende stiftförmige Stapelnasen 31 vorgesehen, die in der Ecke und auf den beiden Schenkeln angeordnet sind. Das Bodenelement 95 weist zwei durchgehende Löcher 29 zur Aufnahme von Verbindungsmitteln 37 auf. Die Löcher 29 sind zwischen den Stapelnasen 31 angeordnet. Sowohl die Löcher 29 als auch die Stapelnasen 31 sind außenseitig der Nut 27 angeordnet.

Das Bodenelement 95 weist im unteren Bereich eine ins Innere ragende Auflage 35 auf, auf der die Trägerplatte 3 aufsetzbar ist. Die Auflage 35 weist ein durchgehendes Loch 36 zur Aufnahme der Verbindungsmitteln 11 auf, mit denen die Trägerplatte 3 am Bodenelement 95 lösbar befestigt wird.

Der untere Bereich des Bodenelements 95 weist einen nach Innen versetzten Eingriff 13 auf, der einen Abschnitt des zweiten Stapelrands ausbildet. Der obere Bereich des Bodenmoduls rag über die Auflage 35 auf und formt so einen rechteckigen seitlichen Anschlag, um die Ecke der Trägerplatte 3 auszurichten.

Die oberen, als Randelemente 97 ausgebildeten Eckelemente 9 haben eine winklige Grundform, deren Schenkel im rechten Winkel aufeinanderstoßen. Ihre strukturierte Unterseite 23 weist eine rechtwinklig verlaufende Nut 27 auf, deren Durchmesser und Form mit dem Eckbereich des Modulrahmens 7 korrespondiert, sodass dessen oberer Bereich in die Nut 27 eingreifen kann. Außerdem sind an der Unterseite drei sacklochförmige Stapelausnehmungen vorgesehen, die in der Ecke und den beiden Schenkeln angeordnet sind. Das Randelement 97 weist außerdem zwei durchgehende Löcher 29 zur Aufnahme von Verbindungsmitteln 37 auf. Sowohl die Löcher 29 als auch die Stapelausnehmungen sind außenseitig der Nut 27 angeordnet.

Die Stapelausnehmungen und Stapelnasen 31 zweier Eckelemente 9 korrespondieren hinsichtlich Form und Position. Bei aufeinander gestapelten Eckelementen 9 greifen die Stapelnasen 31 in die Stapelausnehmungen, sodass die zueinander gewandte Oberseite und Unterseite der Eckelemente 9 aufeinanderliegen, die Löcher 29 und Nuten 27 übereinander ausgerichtet sind und die Nuten 27 eine durchgehende Aussparung 15 für den Modulrahmen 7 ausbilden, die ihn seitlich formschlüssig umschließt.

Die Oberseite des Randelements 97 weist einen außen aufragenden Bereich 39 auf, der einen Abschnitt des ersten Stapelrands ausbildet. Die Oberseite des Randelements 97 und die Unterseite des Bodenelements 95 sind so geformt, dass der Eingriff 13 neben den aufragenden Bereich 39 eingreift und die Unterseite so gegen eine Bewegung nach außen gesichert ist.

Die als Zwischenelemente 99 ausgebildeten Eckelemente 9 sind zwischen den Randelementen 97 und den Bodenelementen 95 angeordnet. Sie haben eine winklige Grundform, deren Schenkel im rechten Winkel aufeinanderstoßen. Sie haben strukturierte Oberseiten 25 und strukturierte Unterseiten 23 zum Halten des Modulrahmens 7 mit Nuten 27, Löchern 29 und Stapelnasen 31 beziehungsweise Stapelausnehmungen, wie bereits zuvor für die anderen Eckelemente 9 beschrieben. Solch ein Zwischenelement 99 mit strukturierter Oberseite 25 und strukturierter Unterseiten 23, in die der Modulrahmen 7 eingreifen kann, ist ein erstes Zwischenelement 91.

Die Rahmeneckmodule 3 können jeweils ein oder mehrere Zwischenelemente 99 umfassen, die zwischen Randelement 97 und Bodenelement 95 gestapelt sind und mit lösbaren Verbindungsmitteln 37 verbunden sind. Zur Verbindung der Eckelemente 9 eines Rahmeneckmoduls 5 sind zwei Schraube-Schraubmutter-Verbindungen vorgesehen, deren Schrauben 41 durch alle Eckelemente 9 greifen und mit Schraubmuttern 43 an der Unterseite der Bodenelemente 95 gesichert werden. Sowohl in den Bodenelementen 95 als auch in den Randelementen 97 sind Absenkungen 45 für die Schraubmuttern 43 beziehungsweise die Schraubenköpfe der Schrauben 41 vorgesehen, sodass die Verbindungsmittel 37 versenkt montiert sind und nicht überstehen.

Bei miteinander verbundenen benachbarten Eckelementen 9 formen die strukturierte Oberseite 25 und die strukturierte Unterseite 23 die Aussparung 15, in der ein Modulrahmen 7 anordnenbar ist. So sind in diesem Ausführungsbeispiel solche Aussparungen 15 sowohl zwischen Randelement 97 und erstem Zwischenelement 91 als auch zwischen Bodenelement 95 und erstem Zwischenelement 91 ausgebildet. Dadurch können zwei Modulrahmen 7 von den Rahmeneckmodulen 7 übereinander gehalten werden.

Allerdings ist in diesem Ausführungsbeispiel lediglich ein Modulrahmen 7 zwischen den Randelementen 97 und den ersten Zwischenelementen 91 vorgesehen, der beim Zusammensetzen der Randelemente 97 und der ersten Zwischenelemente 91 zwischen ihnen platziert worden ist.

Der Modulrahmen 7 ist ein als rechteckförmiger geschlossener Metallrahmen mit rundem Querschnitt ausgebildet. Seine Enden können beispielsweise durch eine Schweißverbindung verbunden sein. Alternativ kann zwischen den Enden ein Spalt vorgesehen sein.

In den aus den Rahmeneckmodulen 5 und dem Modulrahmen 7 zusammengefügten Werkstückträgerrahmen 1 ist der Trägerboden 3 eingesetzt. Die Trägerplatte 3 liegt auf den Auflagen 35 der Bodenelemente 95 auf und ist durch Verbindungsmittel 11 befestigt. Die Größe der Trägerplatte 3 korrespondiert derart mit der Rahmengröße, dass sie in den Rahmen einführbar ist und dennoch auf den Auflagen 35 liegt. Verbindungsmittel 11 sind Schraube-Hutmutter-Verbindungen, wobei die Hutmuttern 21 im Werkstückträgerkorbinneren angeordnet sind.

Die beschriebenen Komponenten erlauben den Aufbau verschiedener Werkstückträgerkörbe, indem die Komponenten in unterschiedlicher Weise zusammengesetzt werden. Ein Werkstückträgerkorb, insbesondere dessen Werkstückträgerrahmen 1 kann in einfacher Weise modifiziert werden, indem nur ein Teil der Komponenten ausgetauscht, entfernt oder weitere Komponenten hinzugefügt werden.

Die Höhe des Werkstückträgerkorbs hängt von der Anzahl Eckelemente 9, insbesondere der Anzahl der Zwischenelemente 99 ab. Im einfachsten Fall ist keines vorgesehen und die Randelemente 97 sind direkt auf den Bodenelementen 95 angeordnet. Mit zunehmender Anzahl von Zwischenelementen 99 nimmt die Höhe des Werkstückträgerkorbs zu. Das Vorsehen weiterer Modulrahmen 7 ist optional, erhöht allerdings die Stabilität, insbesondere bei zunehmender Rahmenhöhe. Abhängig von der Anzahl der verwendeten Zwischenelemente 99 wird die Länge der Schrauben 41 gewählt, sodass sie nicht überstehen.

Der Trägerboden 3 kann in einfacher Weise durch einen anderen Trägerboden 3 ausgetauscht werden.

Länge und Breite des Werkstückträgerrahmens 1 sind durch den Modulrahmen 7 definiert. Durch dessen Austausch können Länge und Breite des Werkstückträgerrahmens 1 in einfacher Weise verändert werden, was den Austausch des Trägerbodens 3 durch einen Trägerboden 3 entsprechender Größe nach sich zieht.

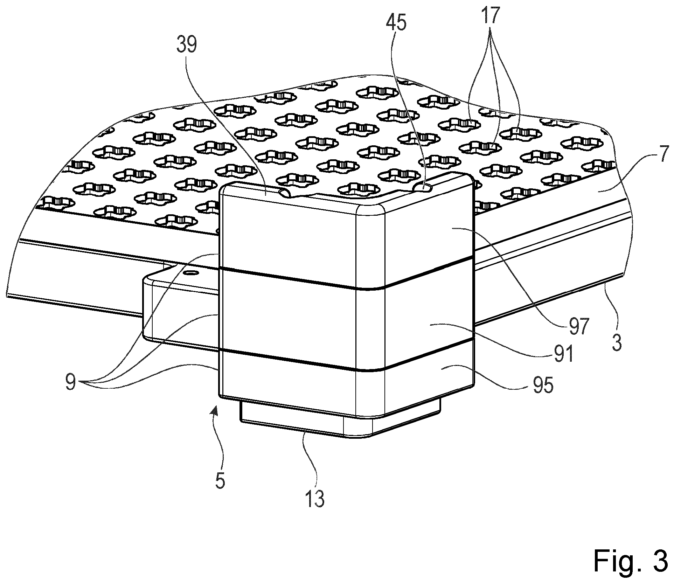

Figur 3 zeigt in einer dreidimensionalen Detaildarstellung den Eckbereich des Werkstückträgerkorbs von außen.

Randelement 97, erstes Zwischenelement 91 und Bodenelement 95 sind aufeinander angeordnet und miteinander verbunden. Sie bilden das Rahmeneckmodul 5, bei dem zwischen Randelement 97 und erstem Zwischenelement 91 der Modulrahmen 7 verläuft. Die Aufsichtskonturen der Eckelemente 9 haben die gleiche Form, sodass aufeinander gestapelte Eckelemente 9 Rahmeneckmodule 5 mit geraden Seitenwänden bilden.

Die Oberseite des Randelements 97 und die Unterseite des Bodenelements 95 formen Abschnitte des ersten und zweiten Stapelrands, die bei aufeinandergestapelten Werkstückträgerrahmen 1 oder Werkstückträgerkörben ineinandergreifen.

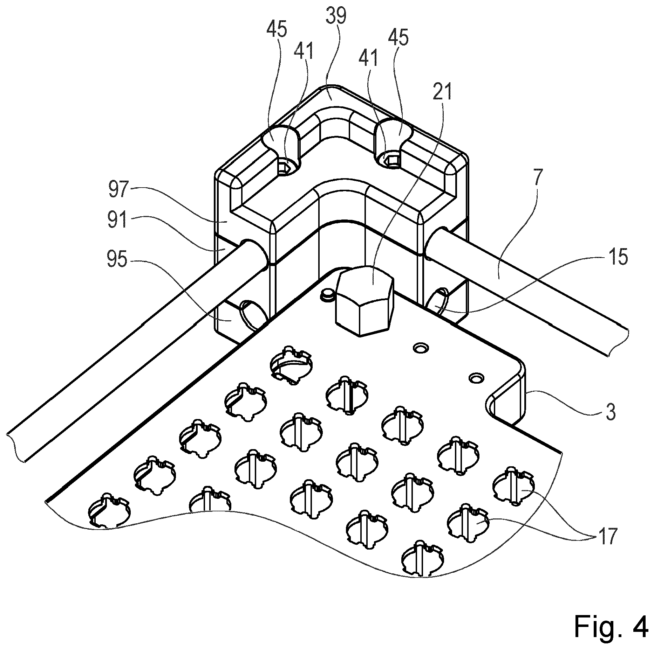

Figur 4 zeigt in einer dreidimensionalen Detaildarstellung den Eckbereich des Werkstückträgerkorbs von oben.

Die inneren Seitenwände des Rahmeneckmoduls 5 bilden einen seitlichen Anschlag, um die Trägerplattenecke auf der Auflage 35 des Bodenelements 95 zu positionieren. Die Verbindung erfolgt durch eine Schraube-Hutmutter-Verbindung, wobei die Hutmutter 21 im Werkstückträgerkorbinneren angeordnet ist. Die Hutmutter 21 mit ihrem runden Kopf verhindert Verletzungen.

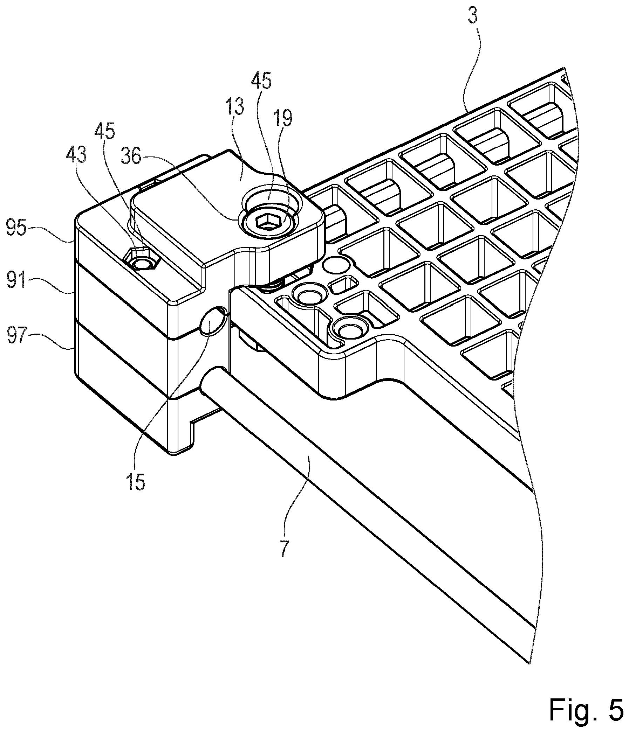

Figur 5 zeigt in einer dreidimensionalen Detaildarstellung den Eckbereich des Werkstückträgerkorbs von unten.

Die Eckelemente 9 sind durch eine Schraube 41, welche durch alle Eckelemente 9 läuft, und eine Schraubenmutter 43 verbunden, die die Schraube 41 sichert. Die Schraube-Schraubenmutter-Verbindung ist versenkt. Absenkungen 45 sind in Randelement 97 und Bodenelement 95.

Die Trägerplatte 3 ist auf der Auflage 35 befestigt, indem die Schraube 19 der Schraube-Hutmutter-Verbindung durch die Löcher in der Auflage 35 und der Trägerplatte 3 greift. Das Loch 36 in der Auflage 35 weist eine Absenkung 45 für den Schraubenkopf auf. Das Loch 36 ist als Doppelloch ausgebildet, sodass die Schraube 19 eine von zwei Positionen einnehmen kann, was Freiheitsgrade bei der Gestaltung der Trägerplatte 3 ermöglicht.

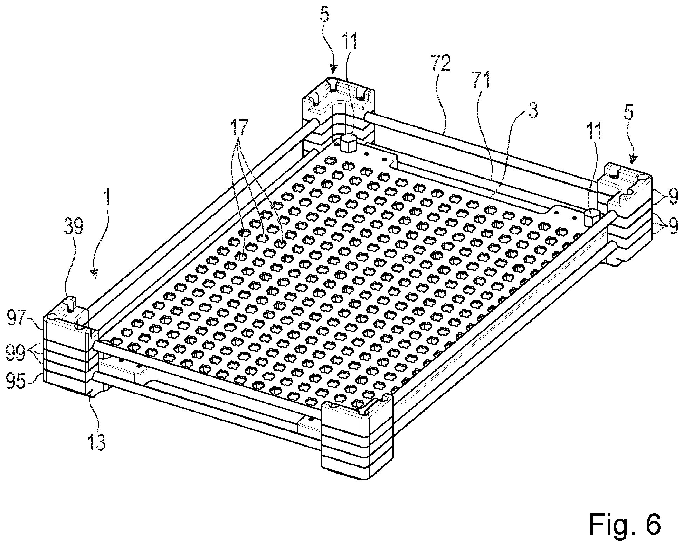

Figur 6 zeigt ein weiteres Ausführungsbeispiel eines modularen Werkstückträgerkorbs mit einem Werkstückträgerrahmen 1 und einem Trägerbogen 3 in einer dreidimensionalen Darstellung. Die Beschreibung für die folgenden Figuren konzentriert sich auf die Unterschiede zum vorherigen Ausführungsbeispiel.

Der modulare Werkstückträgerrahmen 1 umfasst vier Rahmeneckmodule 5 sowie einen ersten Modulrahmen 71 und einen zweiten Modulrahmen 72, die übereinander angeordnet sind und durch die Rahmeneckmodule 5 verlaufen. Der Werkstückträgerrahmen 1 ist rechteckförmig und hat vier Eckbereiche. Die Rahmeneckmodule 5 sind in den Eckbereichen des Werkstückträgerrahmens 1 angeordnet und erstrecken sich quer zu den Modulrahmen 71, 72.

Jedes der Rahmeneckmodule 5 umfasst fünf aufeinandergestapelte Eckelemente 9, die lösbar miteinander verbunden sind. Die unteren Eckelemente 9 der Rahmeneckmodule 5 sind als Bodenelemente 95 ausgebildet, auf der die Trägerplatte 3 aufgesetzt ist und durch Schrauben 19 und Hutmuttern 21 als lösbare Verbindungsmittel 11 befestigt ist.

Die oberen Eckelemente 9 sind als Randelemente 97 ausgebildet, sodass sie einen nicht durchgehenden oberen Rand des Werkstückträgerrahmens 1 formen. Der obere Rand ist als erster Stapelrand ausgebildet und Unterseiten der Bodenelemente 95 bilden einen zweiten Stapelrand aus, die bei zwei aufeinander gestapelten Werkstückträgerrahmen 1 ineinandergreifen.

Zwischen Randelement 97 und Bodenelement 95 sind drei weitere Eckelemente 9 als Zwischenelemente 99 angeordnet, sodass Randelement 97 und Bodenelement 95 beabstandet sind. Randelemente 97, Bodenelemente 95 und zwei der Zwischenelemente 99 sind direkt oberseitig oder unterseitig der Modulrahmen 71, 72 positioniert. Die Zwischenelemente 99 umfassen zweite Zwischenelemente 92 oder dritte Zwischenelemente 93. Zwischen den Bodenelementen 95 und den zweiten Zwischenelementen 92 verläuft der erste Modulrahmen 71. Zwischen den Randelementen 97 und den dritten Zwischenelementen 93 verläuft der zweite Modulrahmen 72. Zwischenelemente 99 als Abstandselemente 98 sind zwischen den zweiten und dritten Zwischenelementen 92, 93 angeordnet.

Die Bodenelemente 95 haben strukturierte Oberseiten 25 und die zweiten Zwischenelemente 92 haben strukturierte Unterseiten 23. Die strukturierten Oberseiten 25 und Unterseiten 23 bilden durchgehende Aussparungen 15 aus, zwischen denen die Eckbereiche des ersten Modulrahmens 71 verlaufen. Die Eckelemente 9 mit miteinander zugewandter strukturierter Oberseite 25 und strukturierter Unterseite 23 umgeben den Modulrahmen 71 seitlich und halten ihn in seiner Position. In gleicher Weise wird der zweite Modulrahmen 72 gehalten, denn die Randelemente 95 haben strukturierte Unterseiten 23, und die dritten Zwischenelemente 93 haben strukturierte Oberseiten 25. Die Oberseiten der zweiten Zwischenelemente 92 und die Unterseiten der dritten Zwischenelemente 93 sind nicht geeignet, einen Modulrahmen 71, 72 zu halten. Zwischen ihnen ist in jedem Rahmeneckmodul 5 ein Abstandselement 98 angeordnet. Beim Abstandselement 98 sind weder Oberseite noch Unterseite geeignet, einen Modulrahmen 71, 72 zu halten. Ein Modulrahmen 71, 72 kann nur zwischen zwei benachbarten Eckelementen 9 positioniert werden, von denen eines eine strukturierte Oberseite 25 hat und das andere eine strukturierte Unterseite 23 hat, die der strukturierten Oberseite 25 zugewandt ist.

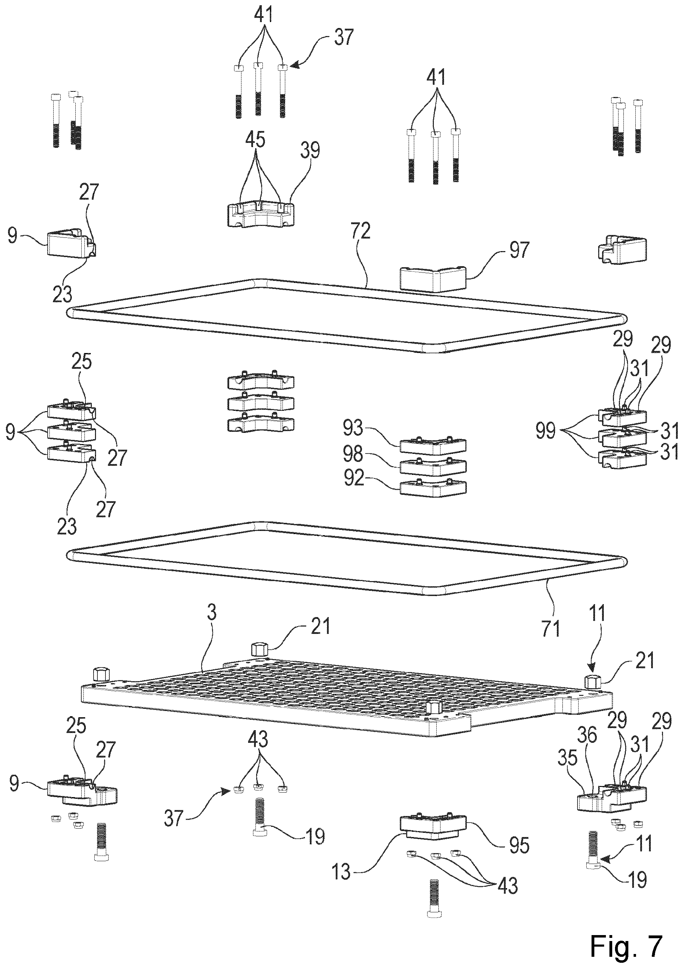

Figur 7 zeigt den modularen Werkstückträgerkorb aus Figur 6 in einer dreidimensionalen Explosionsdarstellung. Der Werkstückträgerrahmen 1 umfasst die dargestellten Komponenten außer der Trägerplatte 3 und die Schrauben 19 und Hutmuttern 21 zur Befestigung der Trägerplatte 3.

Jedes der Rahmeneckmodule 5 umfasst fünf aufeinandergestapelte Eckelemente 9.

Die unteren, als Bodenelemente 95 ausgebildeten Eckelemente 9 haben eine rechtwinklige Grundform. Ihre strukturierte Oberseite 25 weist eine rechtwinklig verlaufende Nut 27 auf, deren Durchmesser und Form mit einem Eckbereich des Modulrahmens 7 korrespondiert, sodass dessen unterer Bereich in der Nut 27 positionierbar ist. An der Oberseite sind zwei Stapelnasen 31 vorgesehen, die auf den beiden Schenkeln angeordnet sind. Das Bodenelement 95 weist drei durchgehende Löcher 29 zur Aufnahme von Verbindungsmitteln 37 auf, die in den Ecken und den Schenkeln angeordnet sind. Sowohl die Löcher 29 als auch die Stapelnasen 31 sind außenseitig der Nut 27 angeordnet.

Das Bodenelement 95 weist im unteren Bereich eine ins Innere ragende Auflage 35 auf, auf der eine Trägerplatte 3 aufsetzbar ist. In der Auflage 35 ist ein durchgehendes Loch 36 zur Aufnahme von Verbindungsmitteln 11, mit denen die Trägerplatte 3 am Bodenelement 95 lösbar befestigt werden kann. Die Innenwand des Bodenelements 95 oberhalb der Auflage 35 formt einen seitlichen Anschlag zur Ausrichtung der Trägerplatte 3. Der untere Bereich des Bodenelements 95 ist als Abschnitt eines zweiten Stapelrands ausgebildet.

Die oberen, als Randelemente 97 ausgebildeten Eckelemente 9 haben eine rechtwinklige Grundform. Ihre strukturierte Unterseite 23 weist eine rechtwinklig verlaufende Nut 27 auf, deren Durchmesser und Form mit dem Eckbereich des Modulrahmens 7 korrespondiert, sodass dessen oberer Bereich in die Nut 27 eingreifen kann. Außerdem sind an der Unterseite zwei Stapelausnehmungen vorgesehen. Das Randelement 97 weist drei durchgehende Löcher 29 zur Aufnahme von Verbindungsmitteln 37 auf.

Die Stapelausnehmungen und Stapelnasen 31 zweier Eckelemente 9 korrespondieren hinsichtlich Form und Position, sodass bei aufeinander gestapelten Eckelementen 9 die Eckelemente 9 aufeinanderliegen, die Löcher 29 übereinander ausgerichtet sind, die Nuten 27 zueinander ausgerichtet sind und die Nuten 27 eine durchgehende Aussparung 15 für die Modulrahmen 71, 72 ausbilden, sodass die Modulrahmen 71, 72 seitlich umschlossen sind.

Die Oberseite des Randelements 97 weist einen außen aufragenden Bereich 39 auf, der einen Abschnitt des ersten Stapelrands ausbildet. Die Stapelränder zweier gestapelter Werkstückträgerrahmen 1 greifen so ineinander, dass der obere Werkstückträgerrahmen 1 gegen eine Bewegung nach außen und seitliches Abgleiten gesichert ist.

Die als Zwischenelemente 99 ausgebildeten Eckelemente 9 sind zwischen den Randelementen 97 und den Bodenelementen 95 angeordnet. Sie haben eine winklige Grundform. Die zweiten Zwischenelemente 92 haben strukturierte Oberseiten 25 ohne Nuten 27, aber mit Löchern 29 und Stapelnasen 31 und Unterseiten mit Stapelausnehmungen und Nuten 27. Die dritten Zwischenelemente 93 haben strukturierte Unterseiten 23 ohne Nuten 27, aber mit Löchern 29 und Stapelausnehmungen und Oberseiten mit Nuten 27 und Stapelnasen 31. Die Abstandselemente 98 haben Stapelnasen 31 und Stapelausnehmungen jedoch keinen Nuten 27. Sie sind nicht geeignet, die Modulrahmen 71, 72 zu halten.

Zur Verbindung der Eckelemente 9 eines Rahmeneckmoduls 5 sind zwei Schraube-Schraubmutter-Verbindungen vorgesehen, deren Schrauben 41 durch alle Eckelemente 9 greifen und mit Schraubmuttern 43 an der Unterseite der Bodenelemente 95 gesichert sind. Sowohl in den Bodenelementen 95 als auch in den Randelementen 97 sind Absenkungen 45 für die Schraubmuttern 43 beziehungsweise Schraubenköpfe vorgesehen, sodass die Verbindungsmittel 37 nicht überstehen.

Die beschriebenen Komponenten erlauben den Aufbau verschiedener Werkstückträgerkörbe. Die Höhe des Werkstückträgerkorbs hängt von der Anzahl der Zwischenelemente 99 ab. Obgleich nicht dargestellt, ist es natürlich auch möglich, ein erstes Zwischenelement 91 mit einem zweiten und/oder einem dritten Zwischenelement 92, 93 zum Halten eines Modulrahmens 71, 72 zu kombinieren.

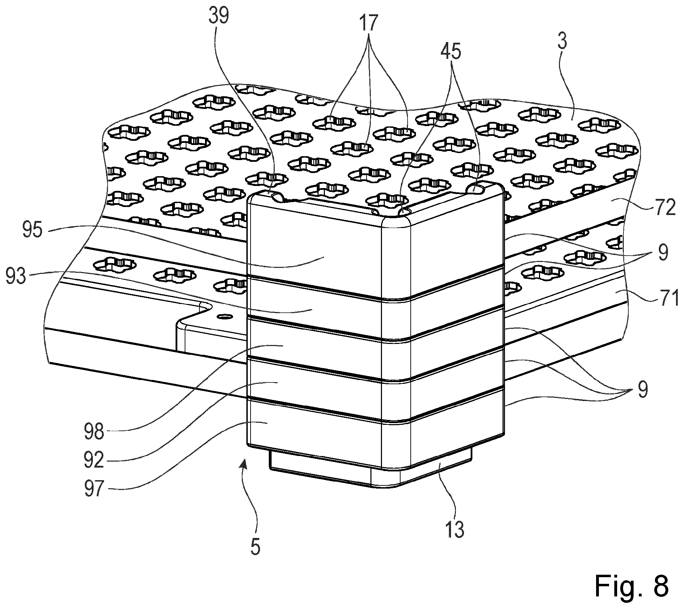

Figur 8 zeigt in einer dreidimensionalen Detaildarstellung den Eckbereich des Werkstückträgerkorbs von außen.

Randelemente 93, Zwischenelemente 99 und Bodenelemente 95 sind aufeinander angeordnet und miteinander verbunden. Sie bilden das Rahmeneckmodul 5, durch den der ersten und der zweite Modulrahmen 71, 72 verlaufen. Die Oberseite des Randelements 97 und die Unterseite des Bodenelements 95 formen Abschnitte des ersten und zweiten Stapelrands.

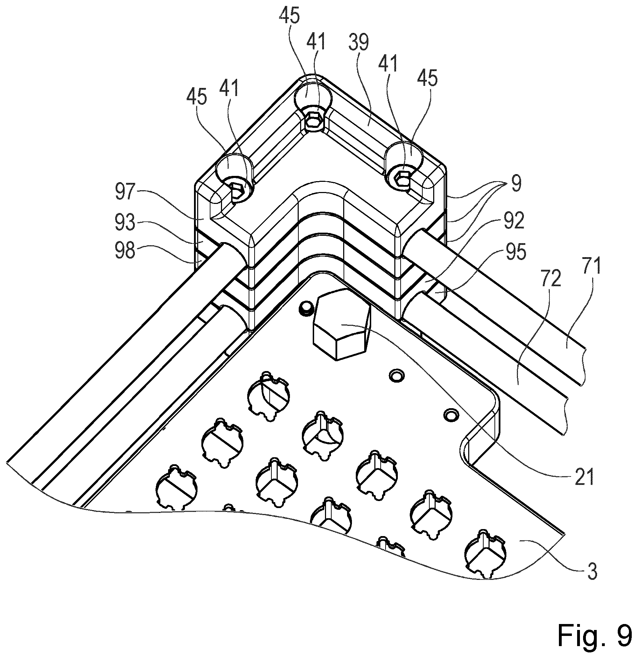

Figur 9 zeigt in einer dreidimensionalen Detaildarstellung den Eckbereich des Werkstückträgerkorbs von oben.

Die inneren Seitenwände des Rahmeneckmoduls 5 bilden einen seitlichen Anschlag für die Trägerplatte 3. Die Befestigung der Trägerplatte 3 am Bodenelement 95 erfolgt durch eine Schraube-Hutmutter-Verbindung, wobei die Hutmuttern 21 im Werkstückträgerkorbinneren angeordnet sind.

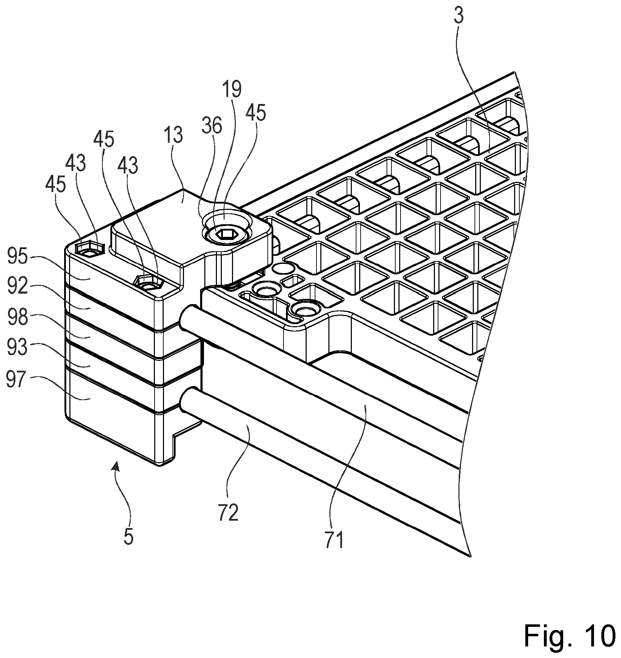

Figur 10 zeigt in einer dreidimensionalen Detaildarstellung den Eckbereich des Werkstückträgerkorbs von unten.

Die Eckelemente 9 sind durch eine Schraube 41, welche durch alle Eckelemente 9 läuft, und eine Schraubenmutter 43 verbunden, die die Schraube 41 sichert. Die Schraube-Schraubenmutter-Verbindung ist versenkt.

Die Trägerplatte 3 ist auf der Auflage 35 befestigt, indem die Schraube 19 der Schraube-Hutmutter-Verbindung durch die Löcher in der Auflage 35 und der Trägerplatte 3 greift. Das Loch 36 in der Auflage 35 weist eine Absenkung 45 für den Schraubenkopf auf. Das Loch 36 ist als Doppelloch ausgebildet.

Ein Ausführungsbeispiel eines Werkstückträgerrahmensystems umfasst eine Mehrzahl von Eckelementen 9, insbesondere eine Mehrzahl von Randelementen 97, Bodenelementen 95 und Zwischenelementen 99, sowie mehrerer Modulrahmen 7, 71, 72 gleicher Größe und weiterer Modulrahmen 7, 71, 72 unterschiedlicher Größe. Ferner sind Trägerböden 3 umfasst. Darüber hinaus sind Befestigungsmittel 11, 37 für Trägerböden und das Verbinden unterschiedlicher Anzahlen von Eckelementen 9 vorgesehen. Solche Komponenten sind in den Explosionsdarstellungen in Figur 2 und Figur 7 gezeigt.

Die Komponenten sind zu verschiedenen Werkstückträgerrahmen 1 zusammensetzbar, wie sie beispielsweise in Zusammenhang mit den Figuren 1 bis 10 beschrieben worden sind. Die Werkstückträgerrahmen 1 unterscheiden sich hinsichtlich ihrer Höhe, was durch eine unterschiedliche Anzahl von Eckelementen 9 bedingt ist. Bei einem Werkstückträgerrahmensystem mit verschiedenen Modulrahmen 7, 71, 72 kann auch die Rahmengröße verändert werden. Die Trägerböden 3 sind austauschbar.

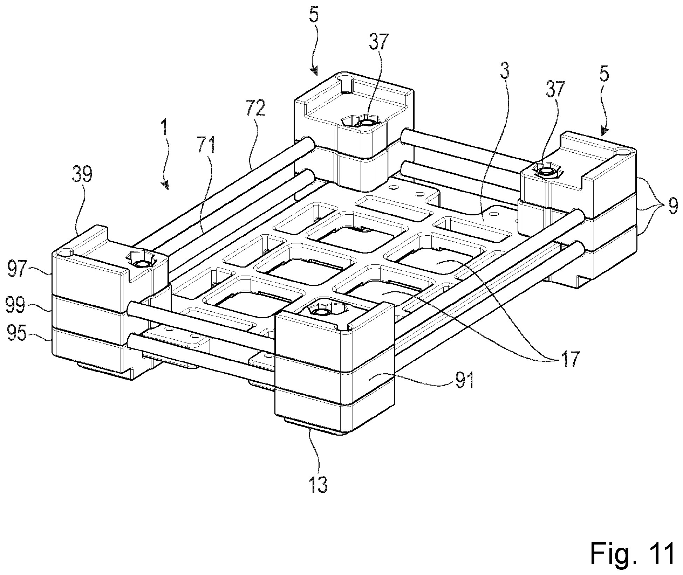

Figur 11 zeigt ein weiteres Ausführungsbeispiel eines modularen Werkstückträgerkorbs mit einem Werkstückträgerrahmen 1 und einem Trägerboden 3 in einer dreidimensionalen Darstellung. Die Beschreibung für die folgenden Figuren konzentriert sich auf die Unterschiede zu den vorherigen Ausführungsbeispielen.

Der modulare Werkstückträgerrahmen 1 umfasst vier Rahmeneckmodule 5 sowie einen ersten Modulrahmen 71 und einen zweiten Modulrahmen 72, die übereinander angeordnet sind und durch die Rahmeneckmodule 5 verlaufen. Der Werkstückträgerrahmen 1 ist rechteckförmig und hat vier Eckbereiche. Die Rahmeneckmodule 5 sind in den Eckbereichen des Werkstückträgerrahmens 1 angeordnet und erstrecken sich quer zu den Modulrahmen 71, 72.

Jedes der Rahmeneckmodule 5 umfasst drei aufeinandergestapelte Eckelemente 9, die lösbar miteinander durch Schrauben 41 und Schraubenmuttern 43 als Verbindungsmittel 37 verbunden sind. Die unteren Eckelemente 9 der Rahmeneckmodule 5 sind als Bodenelemente 95 ausgebildet. Auf den Bodenelementen 95 sind Zwischenelemente 99 aufgesetzt. Zwischen den Bodenelementen 95 und den Zwischenelementen 99 verläuft der erste Modulrahmen 71. Zwischen den Randelementen 97 als oberen Eckelementen 9 und den Zwischenelementen 99 verläuft der zweite Modulrahmen 72.

Die oberen Eckelemente 9, die auf den Zwischenelementen 99 aufgesetzt sind, sind als Randelemente 97 ausgebildet, sodass sie einen nicht durchgehenden oberen Rand des Werkstückträgerrahmens 1 formen. Der obere Rand ist als erster Stapelrand ausgebildet und Unterseiten der Bodenelemente 95 bilden einen zweiten Stapelrand aus, die bei zwei aufeinander gestapelten Werkstückträgerrahmen 1 ineinandergreifen.

Die Bodenelemente 95 haben in diesem Ausführungsbeispiel strukturierte Oberseiten 25 und die Zwischenelemente 99, ausgebildet als erste Zwischenelemente 91, haben strukturierte Unterseiten 23. Die strukturierten Oberseiten 25 und Unterseiten 23 bilden durchgehende Aussparungen 15 aus, zwischen denen die Eckbereiche des ersten Modulrahmens 71 verlaufen. Die Eckelemente 9 mit einander zugewandter strukturierter Oberseite 25 und strukturierter Unterseite 23 umgeben den ersten Modulrahmen 71 seitlich und halten ihn in seiner Position. In gleicher Weise wird der zweite Modulrahmen 72 gehalten, denn die Randelemente 97 haben strukturierte Unterseiten 23, und die ersten Zwischenelemente 91 haben auch strukturierte Oberseiten 25. Ein Modulrahmen 71, 72 kann nur zwischen zwei benachbarten Eckelementen 9 positioniert werden, von denen eines eine strukturierte Oberseite 25 hat und das andere eine strukturierte Unterseite 23 hat, die der strukturierten Oberseite 25 zugewandt ist. In einem Ausführungsbeispiel hat das Zwischenelement 91 eine größere Höhe, sodass auch der Werkstückträgerrahmen höher ist. Die Höhe kann sich beispielsweise an Kundenspezifikationen orientieren.

In diesem Ausführungsbeispiel haben die Rahmeneckmodule 5 in der Draufsicht eine quadratische Kontur. Die Bodenelemente 95 weisen an ihrer Oberseite eine Ausnehmung 94 für Eckbereiche eines Trägerbodens 3 auf. Die auf die Bodenelemente 95 aufgesetzten, zu diesen benachbarten Zwischenelemente 99 ragen über die Eckbereiche des Trägerbodens 3, sodass die Eckbereiche des Trägerbodens 3 zwischen benachbarten Bodenelementen 95 und Zwischenelementen 99 platziert sind. Auch ein auf ein Bodenelement 95 aufgesetztes Randelement 97 könnte den Eckbereich des Trägerbodens 3 so halten.

Durch die aufgestapelten Eckelemente 9 der Rahmeneckmodule 5 ragende Verbindungsmittel 37 greifen auch durch die Eckbereiche des Trägerbodens 3 und bilden eine feste Verbindung der Komponenten. Auch ohne das durch den Trägerboden 3 greifende Verbindungsmittel 37, würde der Trägerboden 3 dennoch formschlüssig gehalten werden.

Der Trägerboden 3 ist aus Kunststoff ausgebildet und weist quadratische Aussparungen 17 auf, in die Werkstückhaltermodule (in Fig. 11 nicht dargestellt) einsetzbar sind.

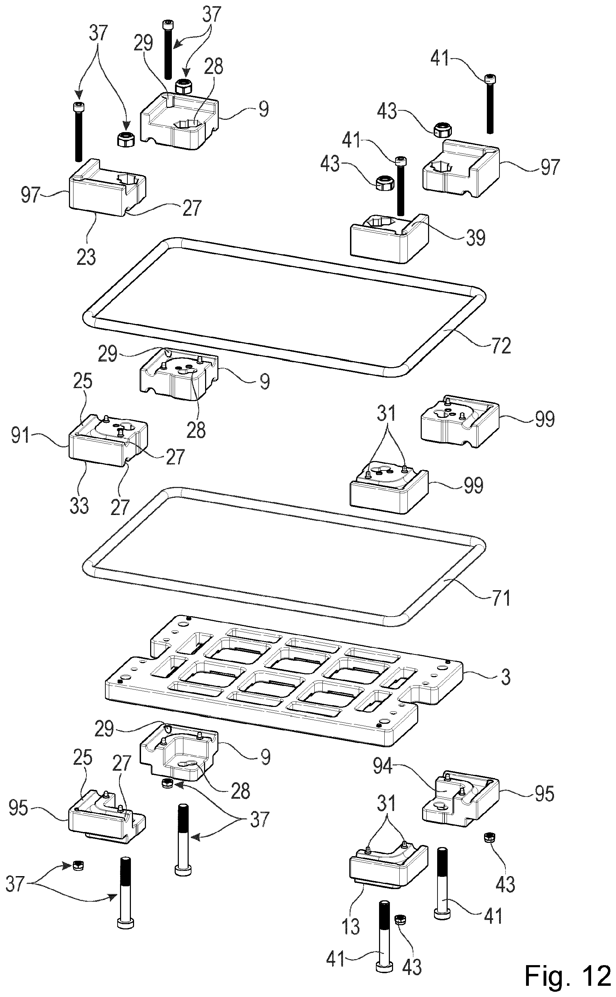

Figur 12 zeigt den modularen Werkstückträgerkorb aus Figur 11 in einer dreidimensionalen Explosionsdarstellung.

Jedes der Rahmeneckmodule 5 umfasst drei aufeinandergestapelte Eckelemente 9. Die unteren, als Bodenelemente 95 ausgebildeten Eckelemente 9 haben in der Draufsicht eine quadratische Kontur. Ihre strukturierte Oberseite 25 weist eine rechtwinklig verlaufende Nut 27 auf, deren Durchmesser und Form mit einem Eckbereich des Modulrahmens 71 korrespondiert, sodass dessen unterer Bereich in der Nut 27 positionierbar ist. An der Oberseite sind zwei Stapelnasen 31 vorgesehen. Das Bodenelement 95 weist in den inneren und äußeren Eckbereichen auf beiden Seiten der Nut 27 zwei durchgehende Löcher 28, 29 zur Aufnahme von Verbindungsmitteln 37 auf.

Die Bodenelemente 95 weisen an ihrer Oberseite eine rechteckförmige Ausnehmung 94 auf, deren Unterseite die Auflage für einen Eckbereich des Trägerbodens 3 bildet, der in der Ausnehmung 94 positioniert wird. Die Ausnehmung 94 ist so geformt, dass ihre Höhe mit der Höhe des Trägerbodens 3 korrespondiert. Die Eckbereiche des Trägerbodens 3 sind somit oberseitig und randseitig bündig in den Ausnehmungen 94 platzierbar, sodass die Bodenelemente 95 einen unterseitigen und randseitigen Anschlag für den Trägerboden 3 bilden. Der untere Bereich des Bodenelements 95 ist als Abschnitt eines zweiten Stapelrands ausgebildet.

Die oberen, als Randelemente 97 ausgebildeten Eckelemente 9 haben in der Draufsicht eine quadratische Kontur. Ihre strukturierte Unterseite 23 weist eine rechtwinklig verlaufende Nut 27 auf, deren Durchmesser und Form mit dem Eckbereich des Modulrahmens 7 korrespondiert, sodass dessen oberer Bereich in die Nut 27 eingreifen kann. Außerdem sind an der Unterseite zwei Stapelausnehmungen vorgesehen, in die die Stapelnasen 31 eines benachbarten Eckelements 9 greifen können. Das Randelement 97 weist zwei durchgehende Löcher 29, 28 zur Aufnahme von Verbindungsmitteln 37 auf.

Die Stapelausnehmungen und Stapelnasen 31 zweier Eckelemente 9 korrespondieren hinsichtlich Form und Position, sodass bei aufeinander gestapelten Eckelementen 9 die Eckelemente 9 aufeinanderliegen, die Löcher 28, 29 übereinander ausgerichtet sind, die Nuten 27 zueinander ausgerichtet sind und die Nuten 27 eine durchgehende Aussparung 15 für die Modulrahmen 71, 72 ausbilden, sodass die Querschnitte der Modulrahmen 71, 72 in den Eckbereichen seitlich umschlossen sind.

Die Oberseite des Randelements 97 weist einen außen aufragenden Bereich 39 auf, der einen Abschnitt des ersten Stapelrands ausbildet. Die Stapelränder zweier gestapelter Werkstückträgerrahmen 1 greifen so ineinander, dass der obere Werkstückträgerrahmen 1 gegen eine Bewegung nach außen und seitliches Abgleiten gesichert ist.

Die als Zwischenelemente 99 ausgebildeten Eckelemente 9 sind zwischen den Randelementen 97 und den Bodenelementen 95 angeordnet. Sie haben eine quaderförmige Grundform mit quadratischer Grundseite. Die ersten Zwischenelemente 91 haben durchgehende Löcher 28, 29 und strukturierte Oberseiten 25 und strukturierte Unterseiten 23 mit Nuten 27 und Stapelnasen 31 beziehungsweise Stapelausnehmungen.

Obgleich in diesem Ausführungsbeispiel nur erste Zwischenelemente 91 dargestellt sind, können in alternativen Ausführungsbeispielen auch zweite Zwischenelemente 92 mit Nuten 27 nur an der Unterseite 23, dritte Zwischenelemente 93 mit Nuten nur an der Oberseite 25 oder Abstandselemente 98 ohne Nuten 27 vorgesehen sein. Die beschriebenen Komponenten erlauben den Aufbau verschiedener Werkstückträgerkörbe. Die Höhe des Werkstückträgerkorbs hängt im Wesentlichen von der Anzahl der Zwischenelemente 99 ab. Es können mehr oder weniger als zwei Modulrahmen 71, 72 vorgesehen sein.

Zur Verbindung der Eckelemente 9 eines Rahmeneckmoduls 5 sind zwei Schraube-Schraubmutter-Verbindungen vorgesehen. Die Schrauben 41 greifen durch die Löcher 28, 29 und werden mit Sechskant-Schraubmuttern 43 gehalten. Sowohl Schraubenköpfe als auch Schraubmuttern 43 sind versenkt angeordnet. Die Schrauben 41 in den inneren Löchern 28 verlaufen gegenläufig zu denen in den äußeren Löchern 29.

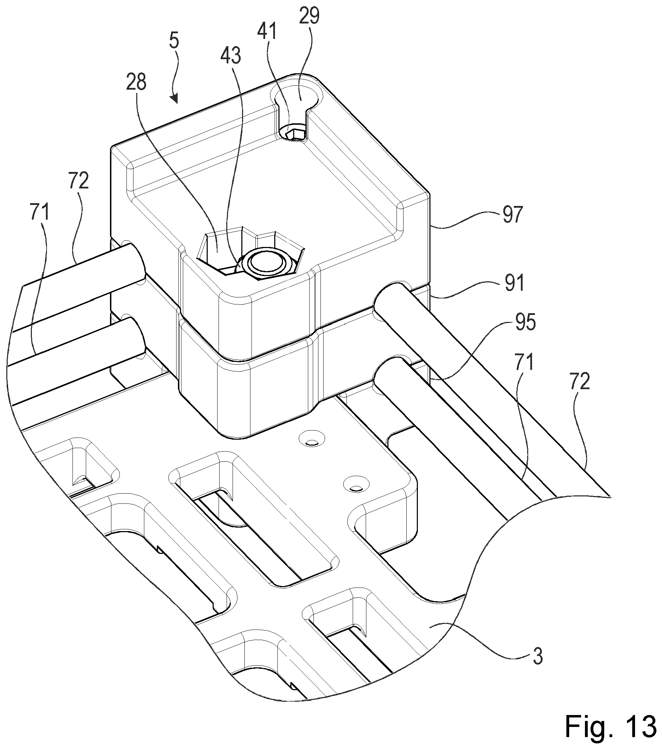

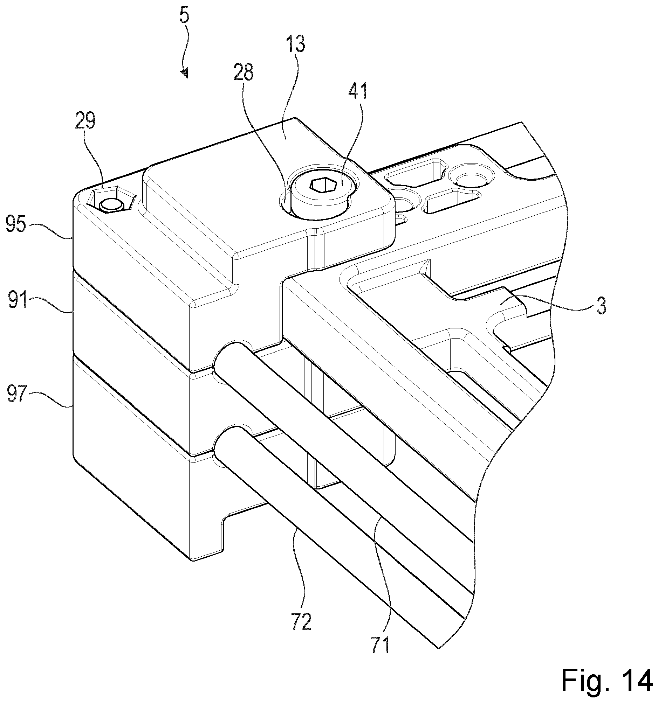

Figur 13 zeigt in einer dreidimensionalen Detaildarstellung den Eckbereich des Werkstückträgerkorbs von oben. Figur 14 zeigt in einer dreidimensionalen Detaildarstellung den Eckbereich des Werkstückträgerkorbs von unten. Die Figu-ren 13 und 14 werden im Folgenden zusammenbeschrieben.

Der Eckbereich des Trägerbodens 3 ist zwischen dem Bodenelement 95 und dem ersten Zwischenelement 91 positioniert. Verbindungsmittel 37 greifen durch einen Außeneckbereich des Rahmeneckmoduls 5 und durch einen Inneneckbereich des Rahmeneckmoduls 5. Die im Außeneckbereich positionierte Schraube 41 greift nur durch die aufgestapelten Eckelemente 9. Die im Inneneckbereich positionierte Schraube 37 greift sowohl durch die aufgestapelten Eckelemente 9 als auch durch den Trägerboden 3.

Die Löcher 28 im Inneneckbereich sind als Doppelloch so geformt, dass die Schrauben 37 und Schraubmuttern 43 an eine von zwei Positionen platzierbar sind. Es wird die zur kurzen Seite benachbarte Position präferiert. Das Doppelloch hat eine oberseitige Absenkung mit polygonförmiger Kontur, um eine Drehung der Schraubenmutter 43 zu verhindern. Die korrespondierenden Löcher in den Eckbereichen des Trägerbodens 3 sind jedoch keine Doppellöcher, sondern sind so geformt, dass die Position der Schrauben 41 benachbart zur kurzen Seite des Werkstückträgerrahmens 1 vorgegeben wird.

Schrauben 41 in den äußeren Ecken greifen durch alle Eckelemente 9 und sind mit Schraubmuttern 43 an der Unterseite der Bodenelemente 95 gesichert. Sowohl in den Bodenelementen 95 als auch in den Randelementen 97 sind Absenkungen 45 für die Schraubmuttern 43 beziehungsweise Schraubenköpfe vorgesehen, sodass die Verbindungsmittel 37 nicht überstehen. Die Absenkungen für die Schraubenmuttern 43 haben eine sechseckige Kontur, um die Schraubenmutter 43 drehfest zu halten. Schrauben 41 in den inneren Ecken greifen durch alle Eckelemente 9 und den Trägerboden 3 und sind mit Schraubmuttern 43 an der Oberseite der Randelemente 97 gesichert.

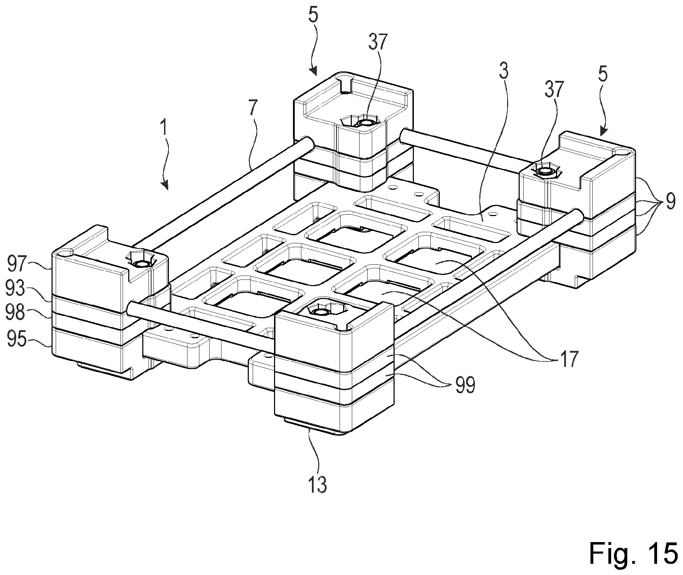

Figur 15 zeigt ein weiteres Ausführungsbeispiel eines modularen Werkstückträgerkorbs mit einem Werkstückträgerrahmen 1 und einem Trägerbogen 3 in einer dreidimensionalen Darstellung. Die Beschreibung für diese Figur konzentriert sich auf die Unterschiede zum vorherigen Ausführungsbeispiel.

In diesem Ausführungsbeispiel ist lediglich ein Modulrahmen 7 vorgesehen. Das Bodenelement 95 weist keine oberseitige Nut für einen Modulrahmen auf. Zwischen den Randelementen 97 und den Bodenelementen 95 sind zwei flache Zwischenelemente 99 angeordnet. Das obere Zwischenelement 99 ist als drittes Zwischenelement 93 ausgebildet, dass nur oberseitig eine Nut 27 hat, jedoch keine unterseitige Nut. Das untere Zwischenelement 99 ist als Abstandselement 98 ohne Nuten 27 ausgebildet.

Die in den Figuren dargestellten Ausführungsbeispiele veranschaulichen exemplarisch die Freiheitsgrade, die die verschiedenen Eckmodule 9, insbesondere verschieden gestaltete Zwischenelemente 99 beim Zusammenfügen eines Werkstückträgerrahmens 1 bieten.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

### Bezugszeichen

- 1: Werkstückträgerrahmen

- 3: Trägerboden, Trägerplatte
- 5: Rahmeneckmodul
- 7: Modulrahmen
- 9: Eckelement
- 11: Verbindungsmittel
- 13: Eingriff
- 15: Aussparung
- 17: Aussparung
- 19: Schraube
- 21: Hutmutter
- 23: strukturierte Unterseite
- 25: strukturierte Oberseite
- 27: Nut
- 29: Loch
- 31: Stapelnase
- 35: Auflage
- 36: Loch
- 37: Verbindungsmittel
- 39: aufragender Bereich
- 41: Schraube
- 43: Schraubenmutter
- 45: Absenkung
- 71: erster Modulrahmen
- 72: zweiter Modulrahmen
- 91: erstes Zwischenelement
- 92: zweites Zwischenelement
- 93: drittes Zwischenelement
- 94: Ausnehmung
- 95: Bodenelement
- 97: Randelement
- 98: Abstandselement
- 99: Zwischenelement

## Patentansprüche

1. Werkstückträgerrahmen (1) mit
- einer Mehrzahl von Rahmeneckmodulen (5), die in Eckbereichen des Werkstückträgerrahmens (1) angeordnet sind, und
- einem Modulrahmen (7, 71, 72), der ein Inneres des Werkstückträgerrahmens (1) seitlich umschließt,
**dadurch gekennzeichnet, dass**
die Rahmeneckmodule (5) jeweils eine Mehrzahl von Eckelementen (9) umfassen, die gestapelt aufeinander angeordnet sind und lösbar miteinander verbunden sind, sodass zwei benachbarte Eckelemente (9) aus jeder Mehrzahl von Eckelementen (9) oberseitig beziehungsweise unterseitig des Modulrahmens (7, 71, 72) angeordnet sind und der Modulrahmen (7, 71, 72) zwischen den zwei benachbarten Eckelementen (9) verläuft.

2. Werkstückträgerrahmen (1) nach Anspruch 1,
wobei das obere der zwei benachbarten Eckelemente (9), zwischen denen der Modulrahmen (7, 71, 72) verläuft, eine strukturierte Unterseite (23) hat,
und/oder das untere der zwei benachbarten Eckelemente (9), zwischen denen der Modulrahmen (7, 71, 72) verläuft, eine strukturierte Oberseite (25) hat,
wobei die Oberseite (25) und die Unterseite (23) ausgebildet sind, dass sie aufeinander liegen und den zwischen ihnen verlaufenden Modulrahmen (7, 71, 72) halten.

3. Werkstückträgerrahmen (1) nach Anspruch 2,
wobei die Rahmeneckmodule (5) weitere Eckelemente (9) aufweisen, die eine strukturierte Oberseite (25) und/oder eine strukturierte Unterseite (23) haben.

4. Werkstückträgerrahmen (1) nach einem der vorherigen Ansprüche,
wobei der Modulrahmen (7, 71, 72) ein erster Modulrahmen (71) ist und der Werkstückträgerrahmen (1) einen zweiten Modulrahmen (72) umfasst, der über dem ersten Modulrahmen (71) angeordnet ist,
wobei zwei benachbarte Eckelemente (9) aus jeder Mehrzahl von Eckelementen (9) oberseitig beziehungsweise unterseitig des zweiten Modulrahmens (72) angeordnet sind und der zweite Modulrahmen (72) zwischen den zwei benachbarten Eckelementen (9) verläuft,
und wobei zwischen dem ersten und dem zweiten Modulrahmen (71, 72) in jedem Rahmeneckmodul (5) ein oder mehrere Eckelemente (9) angeordnet sind.

5. Werkstückträgerrahmen (1) nach einem der vorherigen Ansprüche,
wobei die Eckelemente (9) Stapelnasen (31) und Stapelausnehmungen aufweisen, die bei den gestapelten Eckelementen (9) ineinandergreifen.

6. Werkstückträgerrahmen (1) nach einem der vorherigen Ansprüche,
wobei die unteren Eckelemente (9) der Rahmeneckmodule (5) als Bodenelemente (95) ausgebildet sind, die eine ins Innere ragende Auflage (35) aufweisen, auf der ein Trägerboden (3) aufsetzbar ist.

7. Werkstückträgerrahmen (1) nach Anspruch 6,
wobei die Eckelemente (9), die auf die Bodenelemente (95) aufgesetzt sind, einen auf den Trägerboden (3) ragenden Bereich aufweisen, sodass Eckbereiche des Trägerbodens (3) zwischen den Bodenelementen (95) und den auf den Bodenelementen (95) jeweils positionierten, benachbarten Eckelementen (9) angeordnet sind.

8. Werkstückträgerrahmen (1) nach einem der vorherigen Ansprüche,
wobei die oberen Eckelemente (9) der Rahmeneckmodule (5) als Randelemente (97) ausgebildet sind, sodass sie einen nicht durchgehenden, oberen Rand formen.

9. Werkstückträgerrahmen (1) nach einem der Ansprüche 6 bis 8,
wobei die Bodenelemente (95) eine strukturierte Oberseite (25) haben und/oder die Randelemente (97) eine strukturierte Unterseite (23) haben.

10. Werkstückträgerrahmen (1) nach Anspruch 8 oder 9,
wobei der obere Rand als erster Stapelrand ausgebildet ist und Unterseiten der Bodenelemente (95) einen zweiten Stapelrand ausbilden, der im gestapelten Zustand in den ersten Stapelrand eines weiteren Werkstückträgerrahmens (1) greift, auf den der Werkstückträgerrahmen (1) gestapelt ist.

11. Werkstückträgerrahmen (1) nach einem der Ansprüche 2 bis 10,
wobei eines der zwei Eckelemente (9), zwischen denen der Modulrahmen (7, 71, 72) verläuft, als erstes Zwischenelement (91) ausgebildet ist, das sowohl eine strukturierte Oberseite (25) als auch eine strukturierte Unterseite (23) hat, oder wobei das untere der zwei Eckelemente (9), zwischen denen der Modulrahmen (7, 71, 72) verläuft, als zweites Zwischenelement (92) ausgebildet ist, das eine strukturierte Oberseite (25) hat, und das obere der zwei Eckelemente (9), zwischen denen der Modulrahmen (7, 71, 72) verläuft, als drittes Zwischenelement (93) ausgebildet ist, das eine strukturierte Unterseite (23) hat.

12. Werkstückträgerrahmen (1) nach einem der Ansprüche 2 bis 11,
wobei die strukturierte Oberseite (25) eine erste Nut (27) aufweist und die strukturierte Unterseite eine zweite Nut (27) aufweist und wobei die erste und die zweite Nut (27) eine durchgehende, insbesondere abgewinkelt verlaufende, Aussparung (15) ausbilden, durch die der Modulrahmen (7, 71, 72) verläuft.

13. Werkstückträgerrahmen (1) nach einem der vorherigen Ansprüche,
der vier Eckbereiche hat, wobei der Modulrahmen (7, 71, 72) rechteckförmig ist.

14. Werkstückträgerrahmen (1) nach einem der vorherigen Ansprüche,
umfassend Verbindungsmittel (11), insbesondere Schraubverbindungsmittel (41, 43), die die Eckelemente (9) der Rahmeneckmodule (5) verbinden.

15. Werkstückträgerrahmensystem umfassend eine Mehrzahl von Eckelementen (9) sowie zumindest einen Modulrahmen (7, 71, 72), die zu einem ersten Werkstückträgerrahmen (1) nach einem der vorherigen Ansprüche zusammensetzbar sind und die zu einem zweiten Werkstückträgerrahmen (1) nach einem der vorherigen Ansprüche zusammensetzbar sind, wobei der erste und der zweite Werkstückträgerrahmen (1) sich hinsichtlich ihrer Höhe unterscheiden.

## Claims

1. A workpiece carrier frame (1), comprising
- a plurality of frame corner modules (5) arranged in corner regions of the workpiece carrier frame (1), and
- a module frame (7, 71, 72) that laterally encloses an interior of the workpiece carrier frame (1),
**characterized in that**
the frame corner modules (5) each comprise a plurality of corner elements (9) which are arranged stacked on top of one another and releasably connected to each other, such that two adjacent corner elements (9) of each plurality of corner elements (9) are arranged on an upper side and on a lower side, respectively, of the module frame (7, 71, 72), and the module frame (7, 71, 72) extends between the two adjacent corner elements (9).

2. The workpiece carrier frame (1) according to claim 1,
wherein the upper one of the two adjacent corner elements (9) between which the module frame (7, 71, 72) extends has a structured lower side (23),
and/or the lower one of the two adjacent corner elements (9) between which the module frame (7, 71, 72) extends has a structured upper side (25),
wherein the upper side (25) and the lower side (23) are configured to rest on one another and to hold the module frame (7, 71, 72) extending between them.

3. The workpiece carrier frame (1) according to claim 2,
wherein the frame corner modules (5) comprise further corner elements (9) which have a structured upper side (25) and/or a structured lower side (23).

4. The workpiece carrier frame (1) according to any one of the preceding claims,
wherein the module frame (7, 71, 72) is a first module frame (71) and the workpiece carrier frame (1) comprises a second module frame (72) which is arranged above the first module frame (71),
wherein two adjacent corner elements (9) of each plurality of corner elements (9) are arranged on an upper side and on a lower side, respectively, of the second module frame (72), and the second module frame (72) extends between the two adjacent corner elements (9),
and wherein one or more corner elements (9) are arranged in each frame corner module (5) between the first and the second module frames (71, 72).

5. The workpiece carrier frame (1) according to any one of the preceding claims,
wherein the corner elements (9) comprise stacking noses (31) and stacking recesses which engage with one another in the stacked corner elements (9).

6. The workpiece carrier frame (1) according to any one of the preceding claims,
wherein the lower corner elements (9) of the frame corner modules (5) are formed as bottom elements (95) which comprise a support (35) projecting inwardly, on which a carrier bottom (3) can be placed.

7. The workpiece carrier frame (1) according to claim 6,
wherein the corner elements (9) which are placed on the bottom elements (95) comprise a portion projecting onto the carrier bottom (3), such that corner regions of the carrier bottom (3) are arranged between the bottom elements (95) and the respective adjacent corner elements (9) positioned on the bottom elements (95).

8. The workpiece carrier frame (1) according to any one of the preceding claims,
wherein the upper corner elements (9) of the frame corner modules (5) are configured as edge elements (97) such that they form a non-continuous upper edge.

9. The workpiece carrier frame (1) according to any one of claims 6 to 8,
wherein the bottom elements (95) have a structured upper side (25) and/or the edge elements (97) have a structured lower side (23).

10. The workpiece carrier frame (1) according to claim 8 or 9,
wherein the upper edge is configured as a first stacking edge and lower sides of the bottom elements (95) form a second stacking edge which, in the stacked state, engages in the first stacking edge of a further workpiece carrier frame (1) on which the workpiece carrier frame (1) is stacked.

11. The workpiece carrier frame (1) according to any one of claims 2 to 10,
wherein one of the two corner elements (9) between which the module frame (7, 71, 72) extends is configured as a first intermediate element (91) which has both a structured upper side (25) and a structured lower side (23),
or wherein the lower one of the two corner elements (9) between which the module frame (7, 71, 72) extends is configured as a second intermediate element (92) which has a structured upper side (25), and the upper one of the two corner elements (9) between which the module frame (7, 71, 72) extends is configured as a third intermediate element (93) which has a structured lower side (23).

12. The workpiece carrier frame (1) according to any one of claims 2 to 11,
wherein the structured upper side (25) comprises a first groove (27) and the structured lower side (23) comprises a second groove (27), and wherein the first and the second groove (27) form a continuous, in particular angled, recess (15) through which the module frame (7, 71, 72) extends.

13. Workpiece carrier frame (1) according to one of the preceding claims,
which has four corner areas, wherein the module frame (7, 71, 72) is rectangular in shape.

14. The workpiece carrier frame (1) according to any one of the preceding claims, comprising connecting means (11), in particular screw connecting means (41, 43), which connect the corner elements (9) of the frame corner modules (5).

15. A workpiece carrier frame system comprising a plurality of corner elements (9) and at least one module frame (7, 71, 72), which can be assembled to form a first workpiece carrier frame (1) according to any one of the preceding claims and which can be assembled to form a second workpiece carrier frame (1) according to any one of the preceding claims, wherein the first and the second workpiece carrier frames (1) differ in height.

## Revendications

1. Cadre porte-pièce (1) comportant
- une pluralité de modules d'angle de cadre (5) qui sont disposés dans des zones d'angle du cadre porte-pièce (1), et
- un cadre de module (7, 71, 72) qui entoure latéralement un intérieur du cadre porte-pièce (1),
**caractérisé en ce que**
les modules d'angle de cadre (5) comprennent respectivement une pluralité d'éléments d'angle (9) qui sont disposés en empilement les uns sur les autres et qui sont reliés les uns aux autres de manière amovible, de sorte que deux éléments d'angle (9) adjacents de chaque pluralité d'éléments d'angle (9) sont disposés sur le côté supérieur ou sur le côté inférieur du cadre de module (7, 71, 72) et que le cadre de module (7, 71, 72) s'étend entre les deux éléments d'angle (9) adjacents.

2. Cadre porte-pièce (1) selon la revendication 1,
dans lequel l'élément d'angle supérieur parmi les deux éléments d'angle (9) adjacents entre lesquels s'étend le cadre de module (7, 71, 72) a un côté inférieur structuré (23), et/ou l'élément d'angle inférieur parmi les deux éléments d'angle (9) adjacents entre lesquels s'étend le cadre de module (7, 71, 72) a un côté supérieur structuré (25), dans lequel le côté supérieur (25) et le côté inférieur (23) sont réalisés de sorte qu'ils reposent l'un sur l'autre et maintiennent le cadre de module (7, 71, 72) qui s'étend entre eux.

3. Cadre porte-pièce (1) selon la revendication 2,
dans lequel les modules d'angle de cadre (5) présentent d'autres éléments d'angle (9) qui ont un côté supérieur structuré (25) et/ou un côté inférieur structuré (23).

4. Cadre porte-pièce (1) selon l'une des revendications précédentes,
dans lequel le cadre de module (7, 71, 72) est un premier cadre de module (71) et le cadre porte-pièce (1) comprend un second cadre de module (72) qui est disposé au-dessus du premier cadre de module (71),
dans lequel deux éléments d'angle (9) adjacents de chaque pluralité d'éléments d'angle (9) sont disposés sur le côté supérieur ou sur le côté inférieur du second cadre de module (72) et le second cadre de module (72) s'étend entre les deux éléments d'angle (9) adjacents,
et dans lequel un ou plusieurs éléments d'angle (9) sont disposés entre le premier et le second cadre de module (71, 72) dans chaque module d'angle de cadre (5).

5. Cadre porte-pièce (1) selon l'une des revendications précédentes,
dans lequel les éléments d'angle (9) présentent des ergots d'empilement (31) et des évidements d'empilement qui s'emboîtent les uns dans les autres lorsque les éléments d'angle (9) sont empilés.

6. Cadre porte-pièce (1) selon l'une des revendications précédentes,
dans lequel les éléments d'angle (9) inférieurs des modules d'angle de cadre (5) sont réalisés sous forme d'éléments de fond (95) qui présentent un appui (35) dépassant à l'intérieur sur lequel un fond de support (3) peut être posé.

7. Cadre porte-pièce (1) selon la revendication 6,
dans lequel les éléments d'angle (9) qui sont placés sur les éléments de fond (95) présentent une zone faisant saillie sur le fond de support (3), de sorte que des zones d'angle du fond de support (3) sont disposées entre les éléments de fond (95) et les éléments d'angle (9) adjacents positionnés respectivement sur les éléments de fond (95).

8. Cadre porte-pièce (1) selon l'une des revendications précédentes,
dans lequel les éléments d'angle (9) supérieurs des modules d'angle de cadre (5) sont réalisés sous forme d'éléments de bord (97), de sorte qu'ils forment un bord supérieur non continu.

9. Cadre porte-pièce (1) selon l'une des revendications 6 à 8,
dans lequel les éléments de fond (95) ont un côté supérieur structuré (25) et/ou les éléments de bord (97) ont un côté inférieur structuré (23).

10. Cadre porte-pièce (1) selon la revendication 8 ou 9,
dans lequel le bord supérieur est réalisé sous la forme d'un premier bord d'empilement et des côtés inférieurs des éléments de fond (95) forment un second bord d'empilement qui, à l'état empilé, vient en prise dans le premier bord d'empilement d'un autre cadre porte-pièce (1) sur lequel le cadre porte-pièce (1) est empilé.

11. Cadre porte-pièce (1) selon l'une des revendications 2 à 10,
dans lequel l'un des deux éléments d'angle (9) entre lesquels s'étend le cadre de module (7, 71, 72) est réalisé sous la forme d'un premier élément intermédiaire (91) qui a à la fois un côté supérieur structuré (25) et un côté inférieur structuré (23), ou dans lequel l'élément d'angle inférieur parmi les deux éléments d'angle (9) entre lesquels s'étend le cadre de module (7, 71, 72) est réalisé en tant que deuxième élément intermédiaire (92) qui a un côté supérieur structuré (25), et l'élément d'angle supérieur parmi les deux éléments d'angle (9) entre lesquels s'étend le cadre de module (7, 71, 72) est réalisé en tant que troisième élément intermédiaire (93) qui a un côté inférieur structuré (23).

12. Cadre porte-pièce (1) selon l'une des revendications 2 à 11,
dans lequel le côté supérieur structuré (25) présente une première rainure (27) et le côté inférieur structuré présente une seconde rainure (27) et dans lequel la première et la seconde rainure (27) forment un évidement (15) continu, en particulier s'étendant de manière à être coudé, à travers lequel s'étend le cadre de module (7, 71, 72).

13. Cadre porte-pièce (1) selon l'une des revendications précédentes,
lequel a quatre zones d'angle, dans lequel le cadre de module (7, 71, 72) est rectangulaire.

14. Cadre porte-pièce (1) selon l'une des revendications précédentes, comprenant des moyens de liaison (11), en particulier des moyens de liaison par vissage (41, 43), qui relient les éléments d'angle (9) des modules d'angle de cadre (5).

15. Système de cadre porte-pièce comprenant une pluralité d'éléments d'angle (9) ainsi qu'au moins un cadre de module (7, 71, 72) qui peuvent être assemblés en un premier cadre porte-pièce (1) selon l'une des revendications précédentes et qui peuvent être assemblés en un second cadre porte-pièce (1) selon l'une des revendications précédentes, dans lequel le premier et le second cadre porte-pièce (1) se différencient par leur hauteur.
